(19) Europäisches Patentamt / European Patent Office / Office européen des brevets

(11) **EP 3 587 075 B1**

(12) **EUROPEAN PATENT SPECIFICATION**

(45) Date of publication and mention
of the grant of the patent:
**05.01.2022 Bulletin 2022/01**

(51) Int Cl.:
**B29C 64/165** *(2017.01)*   **B29C 64/393** *(2017.01)*

(21) Application number: **19182125.5**

(22) Date of filing: **25.06.2019**

(54) **METHOD FOR FABRICATING OBJECT AND APPARATUS FOR FABRICATING OBJECT**

VERFAHREN ZUR HERSTELLUNG EINES OBJEKTS UND VORRICHTUNG ZUR HERSTELLUNG EINES OBJEKTS

PROCÉDÉ ET APPAREIL DE FABRICATION D'UN OBJET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.06.2018 JP 2018121479**

(43) Date of publication of application:
**01.01.2020 Bulletin 2020/01**

(73) Proprietor: **Ricoh Company, Ltd.**
**Tokyo 143-8555 (JP)**

(72) Inventor: **PARK, Soyoung**
**Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**WO-A1-2016/119885     WO-A1-2017/200533**
**WO-A1-2017/200534     US-A1- 2017 151 722**

## Description

### BACKGROUND

#### Technical Field

Aspects of the present disclosure relate to a method for fabricating an object and an apparatus for fabricating an object.

#### Discussion of the Background Art

In a three-dimensional fabrication method by powder lamination (also referred to as a powder lamination fabrication method), a method for performing fabrication by applying an ink containing a radiation absorber to a fabrication region on a surface of a powder layer and applying radiant energy thereto to solidify the powder (HSS method) is known.

At an edge of the fabrication region adjacent to a non-fabrication region, when radiant energy is applied thereto, heat escapes to the non-fabrication region. Therefore, bonding of particles of powder is not sufficiently performed, leading to a decrease in the accuracy and strength of a fabrication layer which is a layered fabrication object disadvantageously.

In order to solve such a disadvantage, it has been proposed to increase the amount of ink at an edge of a fabrication region (see, for example, JP-4691680-B (WO 2005/011959 A1)).

JP-4691680-B (WO 2005/011959 A1) describes that the amount of radiation absorption is changed by changing the application amount of a droplet containing a radiation absorbing material from a head for the purpose of improving the accuracy and strength of the edge of the fabrication region.

WO 2016/119885 A1 discloses a method of fabricating a three dimensional object. A build layer comprising an area of solidified build material and an area of non-solidified build material is formed. The build layer is formed by depositing a layer of non-solidified build material and treating the build material to form the area of solidified build material. The method also involves determining an edge profile for the build layer. Determining the edge profile involves measuring a variation in height of the build layer across a transition between the area of solidified build material and the area of non-solidified build material.

US 2017/0151722 A1 discloses that in a computational modeling method for identifying how to apply a modifying agent during a three-dimensional (3D) printing method, a thermal diffusion model of a layer of a 3D object to be formed from a portion of a sinterable material using the 3D printing method is created. The thermal diffusion model is created by a computer running computer readable instructions stored on a non-transitory, tangible computer readable storage medium. A quantity of the modifying agent to be selectively applied is calculated, by the computer, based upon the thermal diffusion model.

WO 2017/200534 A1 discloses that a three-dimensional (3D) printer may include a first delivery device to selectively deposit first liquid droplets onto a layer of build materials, in which the first liquid has a fusing radiation absorption property. The 3D printer may also include a fusing radiation generator to selectively emit fusing radiation at multiple ranges of wavelengths and at selected locations to selectively fuse the build materials and a controller to tune a range of wavelengths at which the fusing radiation generator is to emit fusing radiation based upon the fusing radiation absorbing property of the deposited first liquid, to determine the selected locations at which the fusing radiation at the tuned range of wavelengths is to be emitted, and to control the fusing radiation generator to selectively emit fusing radiation at the tuned range of wavelengths and onto the selected locations.

WO 2017/200533 A1 discloses that a three-dimensional (3D) printer may include a first delivery device to selectively deposit a fusing agent onto a layer of build materials and a second delivery device to deposit coolant droplets at tuned drop weights onto the layer of build materials. The 3D printer may also include a controller to control the second delivery device to selectively deposit the coolant droplets at the tuned drop weights onto selected areas of the build material layer, in which the drop weights of the selectively deposited coolant droplets are tuned to provide a thermal balance between multiple areas of the build material layer during application of fusing radiation onto the build material layer.

### SUMMARY

The invention is set out in the appended independent claims. The dependent claims describe advantageous embodiments. An object of the present disclosure is to provide a method for fabricating an object, capable of improving the accuracy and strength of a fabrication layer at an edge of a fabrication region.

In an aspect of the present disclosure, there is provided a method for fabricating an object includes forming, first applying, second applying, and repeating. The forming forms a powder layer. The first applying applies a droplet containing a radiation absorber to the powder layer.

The second applying applies radiant energy to the powder layer. The repeating repeats the forming, the first applying, and the second applying. The first applying includes applying the droplet to a surface of the powder layer to form a fabrication region; dividing the fabrication region into a plurality of divided regions; and applying the droplet a plurality of times to a partial specific divided region among the plurality of divided regions. The second applying includes applying the radiant energy with a variable radiation intensity to a range including at least the specific divided region.

In an aspect of the present disclosure, there is provided an apparatus for fabricating an object. The apparatus includes a fabricator, an applier, a radiant energy source, and a controller. The fabricator is configured to form a powder layer. The applier is configured to apply a droplet containing a radiation absorber to the powder layer. The radiant energy source is configured to apply radiant energy to the powder layer. The controller is configured to repeat formation of the powder layer with the fabricator, application of the droplet with the applier, and application of the radiant energy with the radiant energy source. The controller is configured to cause the applier to apply the droplet to a surface of the powder layer to form a fabrication region; divide the fabrication region into a plurality of divided regions; cause the applier to apply the droplet a plurality of times to a partial specific divided region among the plurality of divided regions; and cause the radiant energy source to apply the radiant energy with a variable radiation intensity to a range including at least the specific divided region.

The present disclosure can provide a method for fabricating an object, capable of improving the accuracy and strength of a fabrication layer at an edge of a fabrication region.

BRIEF DESCRIPTION OF THE DRAWINGS

The aforementioned and other aspects, features, and advantages of the present disclosure would be better understood by reference to the following detailed description when considered in connection with the accompanying drawings, wherein:

FIG. 1 is a plan view for explaining an example of an apparatus for fabricating an object according to an embodiment of the present disclosure;
FIG. 2 is a side view for explaining an example of the apparatus for fabricating an object according to an embodiment of the present disclosure;
FIG. 3 is a cross-sectional view for explaining an example of the apparatus for fabricating an object according to an embodiment of the present disclosure;
FIG. 4 (including FIG. 4A and FIG. 4B) is a block diagram for explaining an outline of a controller in an example of the apparatus for fabricating an object according to an embodiment of the present disclosure;
FIG. 5A is a schematic view for explaining an example of a method for fabricating an object according to an embodiment of the present disclosure;
FIG. 5B is a schematic view for explaining an example of the method for fabricating an object according to an embodiment of the present disclosure;
FIG. 5C is a schematic view for explaining an example of the method for fabricating an object according to an embodiment of the present disclosure;
FIG. 5D is a schematic view for explaining an example of the method for fabricating an object according to an embodiment of the present disclosure;
FIG. 5E is a schematic view for explaining an example of the method for fabricating an object according to an embodiment of the present disclosure;
FIG. 5F is a schematic view for explaining an example of the method for fabricating an object according to an embodiment of the present disclosure;
FIGS. 6A, 6B, and 6C are schematic diagrams for explaining an example of a permeation behavior of a fabricating liquid;
FIG. 7A is a schematic view illustrating an example of an image diagram in which a part including a fabrication region in one fabrication layer is cut out;
FIGS. 7B-1, 7B-2, and 7B-3 are schematic diagrams illustrating an example of the image diagram in which a part including a fabrication region in one fabrication layer is cut out;

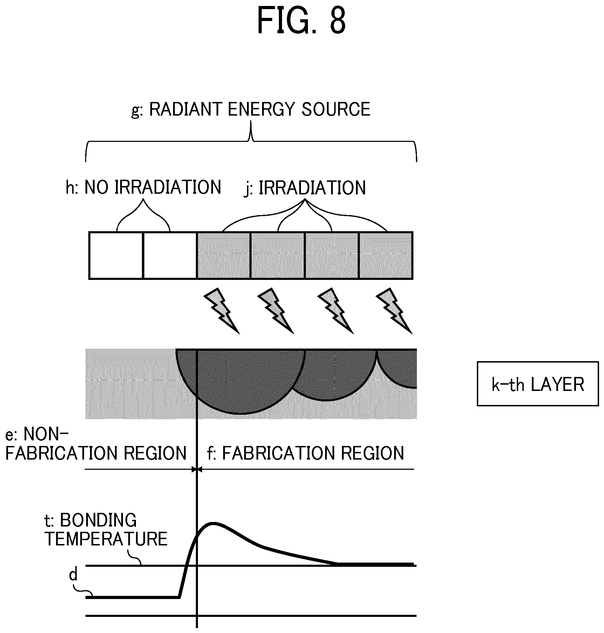

FIG. 8 is a schematic diagram illustrating an example of the image diagram in which a part including a fabrication region in one fabrication layer is cut out;

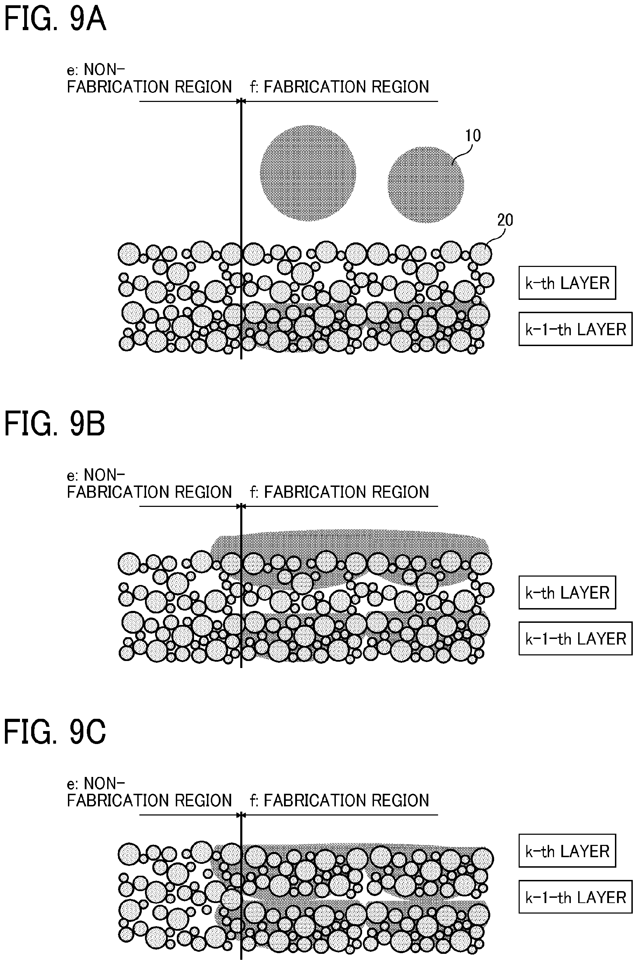

FIGS. 9A, 9B, and 9C are schematic diagrams for explaining an example of a permeation behavior of a fabricating liquid;

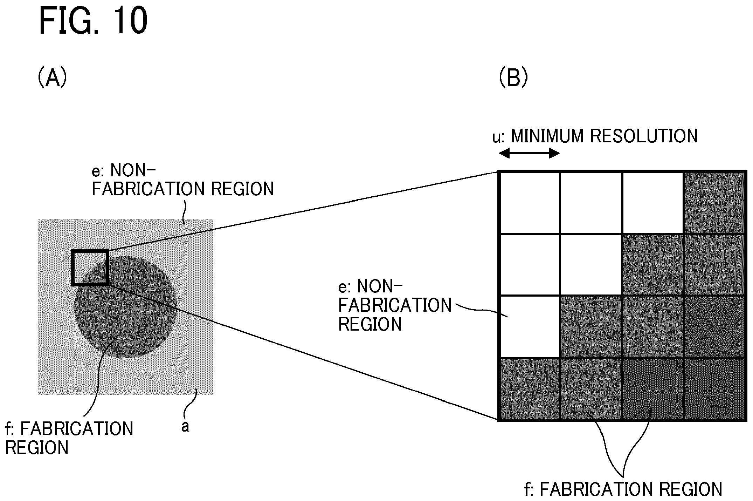

FIG. 10 is a schematic view for explaining an example of a pattern for dividing a fabrication region on a surface of a powder layer;

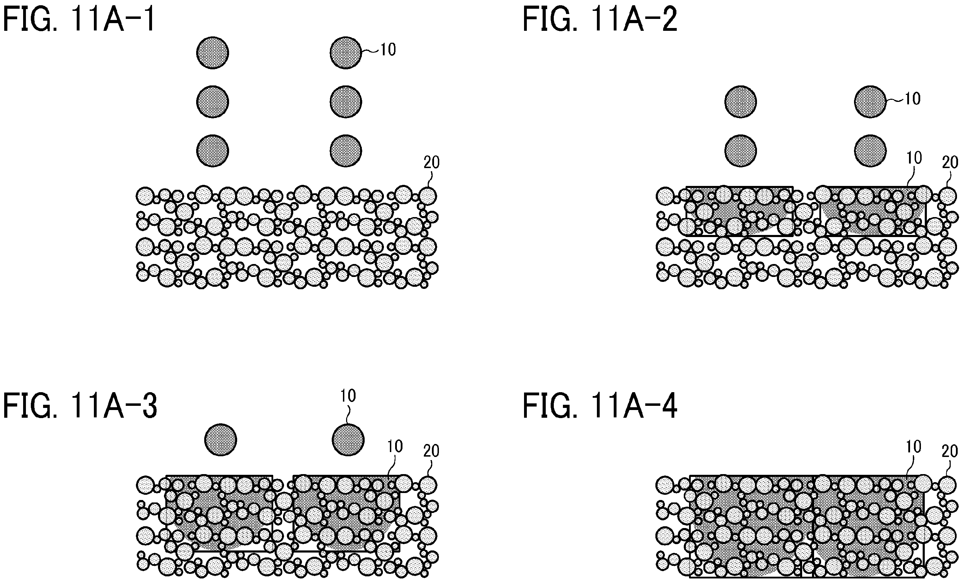

FIGS. 11A-1, 11A-2, 11A-3, and 11A-4 are schematic diagrams for explaining how droplets are applied a plurality of times;

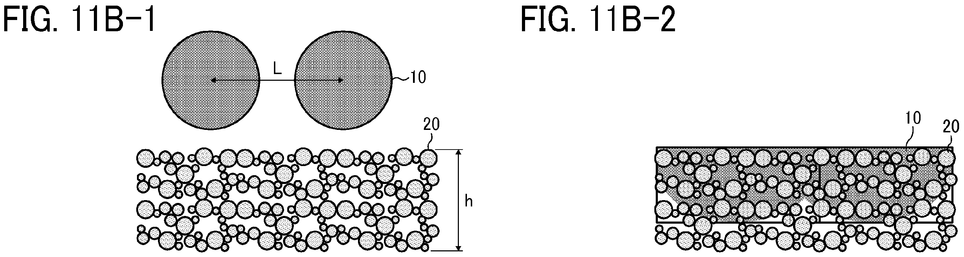

FIGS. 11B-1 and 11B-2 are schematic diagrams for explaining a space between droplets at the time of applying the droplets;

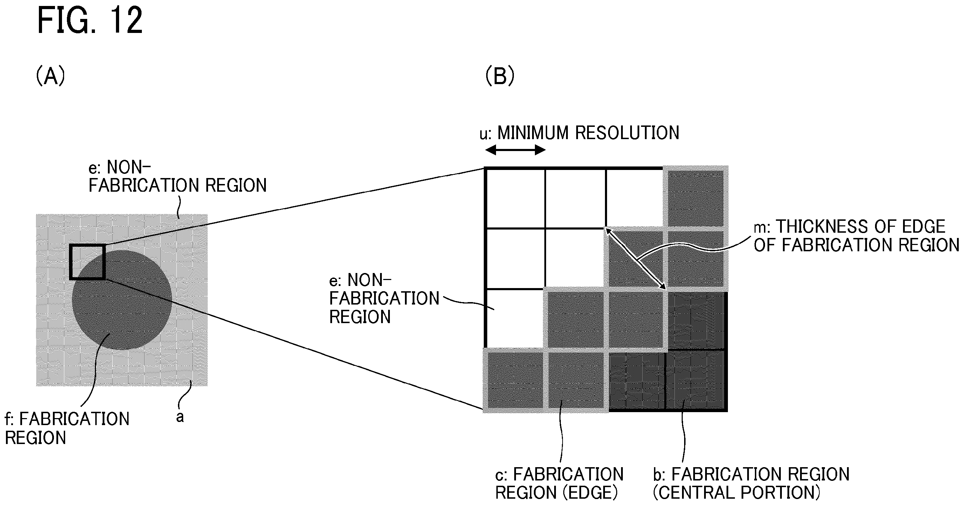

FIG. 12 is a schematic view for explaining an example of a pattern for dividing a fabrication region on a surface of a powder layer and dividing an edge region;

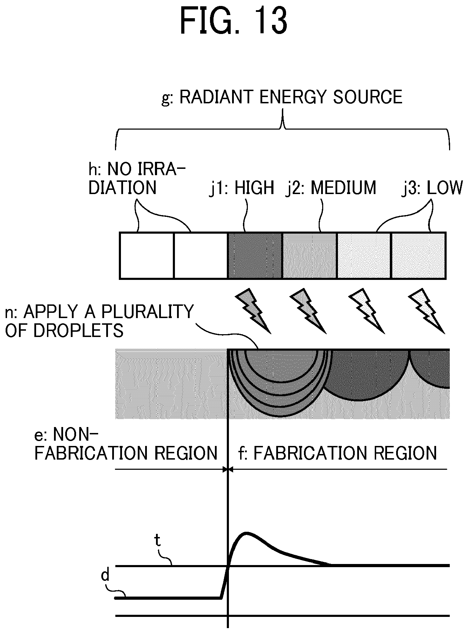

FIG. 13 is a schematic diagram for explaining how fabrication is performed in an embodiment of the present disclosure;

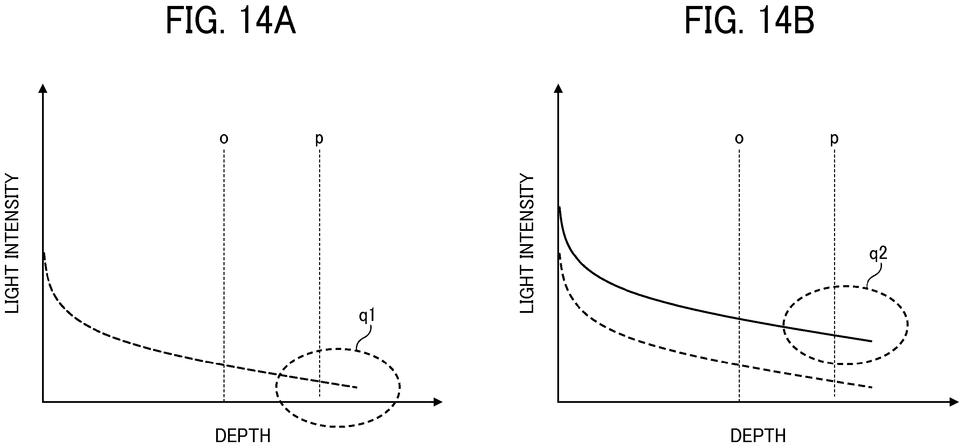

FIGS. 14A and 14B are schematic graphs for explaining a radiant energy application effect in an embodiment of the present disclosure;

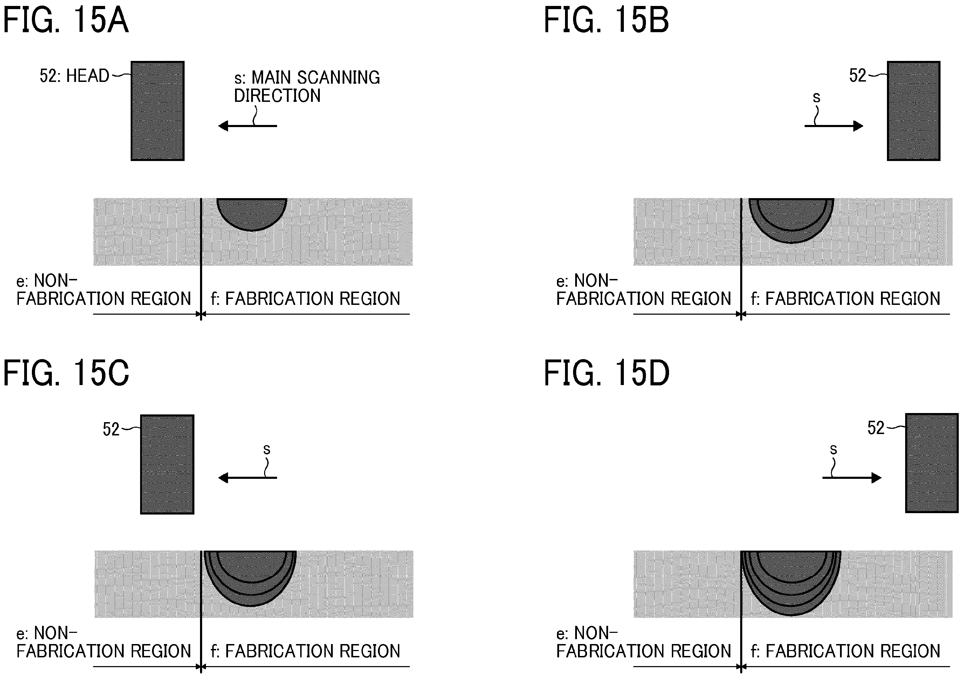

FIG. 15A is a schematic diagram for explaining a flow of a method for fabricating an object according to an embodiment of the present disclosure;
FIG. 15B is a schematic diagram for explaining the flow of the method for fabricating an object according to an embodiment of the present disclosure;
FIG. 15C is a schematic diagram for explaining the flow of the method for fabricating an object according to an embodiment of the present disclosure;
FIG. 15D is a schematic diagram for explaining the flow of the method for fabricating an object according to an embodiment of the present disclosure;

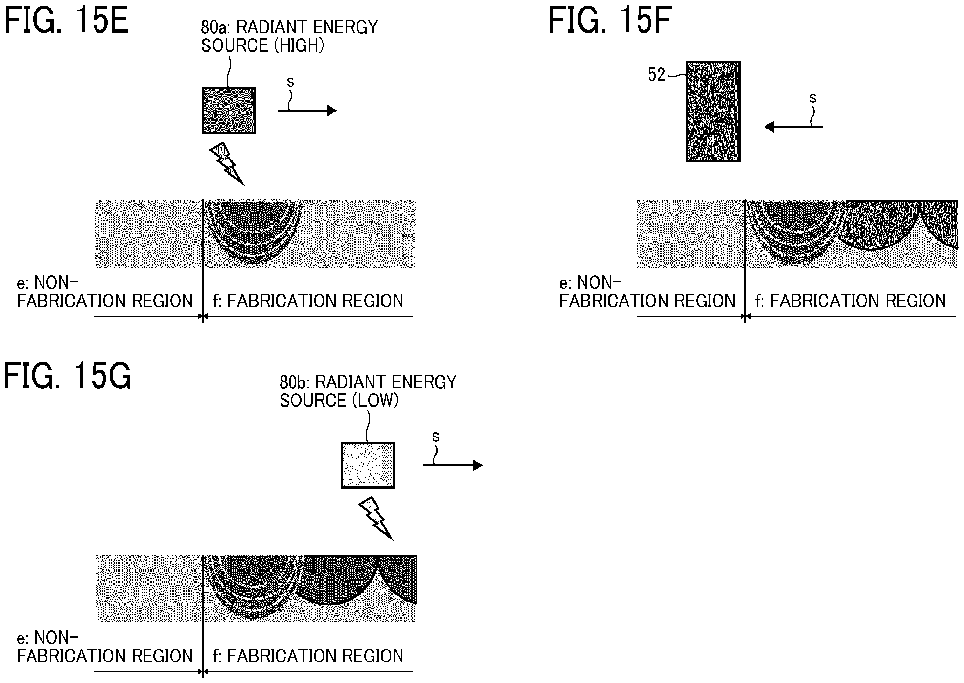

FIG. 15E is a schematic diagram for explaining the flow of the method for fabricating an object according to an embodiment of the present disclosure;
FIG. 15F is a schematic diagram for explaining the flow of the method for fabricating an object according to an embodiment of the present disclosure;

FIG. 15G is a schematic diagram for explaining the flow of the method for fabricating an object according to an embodiment of the present disclosure;

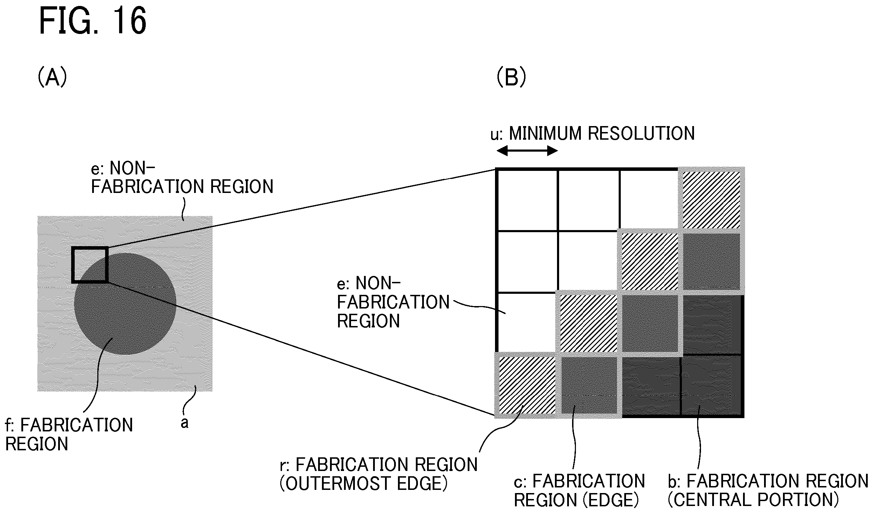

FIG. 16 is a schematic view for explaining an example of a pattern for dividing a fabrication region on a surface of a powder layer and dividing an outermost edge area;

FIGS. 17A-1 and 17A-2 are schematic diagrams for explaining a radiant energy irradiation step in the present embodiment;

FIGS. 17B-1 and 17B-2 are schematic diagrams for explaining the radiant energy irradiation step in the present embodiment;

FIGS. 17C-1 and 17C-2 are schematic diagrams for explaining the radiant energy irradiation step in the present embodiment; and

FIGS. 17D-1 and 17D-2 are schematic diagrams for explaining the radiant energy irradiation step in the present embodiment.

The accompanying drawings are intended to depict embodiments of the present disclosure and should not be interpreted to limit the scope thereof. The accompanying drawings are not to be considered as drawn to scale unless explicitly noted.

DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner and achieve similar results.

Although the embodiments are described with technical limitations with reference to the attached drawings, such description is not intended to limit the scope of the disclosure and all of the components or elements described in the embodiments of this disclosure are not necessarily indispensable.

Referring now to the drawings, embodiments of the present disclosure are described below. In the drawings for explaining the following embodiments, the same reference codes are allocated to elements (members or components) having the same function or shape and redundant descriptions thereof are omitted below.

The present inventor has studied a method for improving the accuracy and strength of a fabrication layer at an edge of a fabrication region in a method for fabricating an object.

As a result, according to a conventional method, it has been found that the strength of a fabricated object can be secured, but the accuracy of the fabrication object is improved because ink spreads in a direction (XY direction) parallel to a lamination surface when a fabrication layer is laminated. Such a method is not sufficient to satisfy both the accuracy and the strength of a fabrication layer at an edge of a fabrication region.

Therefore, as a result of intensive studies, the present inventor has found that a method for fabricating an object with the following configuration is effective as a method capable of improving both the accuracy and the strength of a fabrication layer at an edge of a fabrication region.

Method for fabricating fabrication object and apparatus for fabricating fabrication object

An embodiment of the present disclosure has the following characteristics in a method (HSS method) for performing fabrication by applying an ink containing a radiation absorber to a fabrication region on a surface of a powder layer and applying radiant energy thereto to solidify the powder. A method for fabricating an object according to an embodiment of the present disclosure includes:

(i) forming a powder layer;
(ii) applying a droplet containing a radiation absorber to the powder layer;
(iii) applying radiant energy to the powder layer; and
(iv) repeating the steps (i) to (iii), and

in the step (ii), a fabrication region formed by applying the droplet to a surface of the powder layer is divided into a plurality of sections, and the droplet is applied a plurality of times to a partial specific divided region among the divided regions, and
in the step (iii), the radiation intensity applied to a range including at least the specific divided region can be changed.

An apparatus for fabricating an object according to an embodiment of the present disclosure includes:

(i) a unit to form a powder layer;
(ii) a unit to apply a droplet containing a radiation absorber to the powder layer;
(iii) a unit to apply radiant energy to the powder layer; and
(iv) a unit to repeat operations performed by the units (i) to (iii), and is characterized in that

in the unit (ii), a fabrication region formed by applying the droplet to a surface of the powder layer is divided into a plurality of sections, and the droplet is applied a plurality of times to a partial specific divided region among the divided regions, and
in the unit (iii), the radiation intensity applied to a range including at least the specific divided region can be changed.

The method for fabricating an object according to an embodiment of the present disclosure is synonymous with performing the method using the apparatus for fabricating an object according to an embodiment of the present disclosure. Meanwhile, the apparatus for fabricating an object according to an embodiment of the present disclosure is synonymous with performing the method for fabricating an object according to an embodiment of the present disclosure. Therefore, details of the apparatus for fabricating an object according to an embodiment of the present disclosure will also be clarified through description of the method for fabricating an object according to an embodiment of the present disclosure.

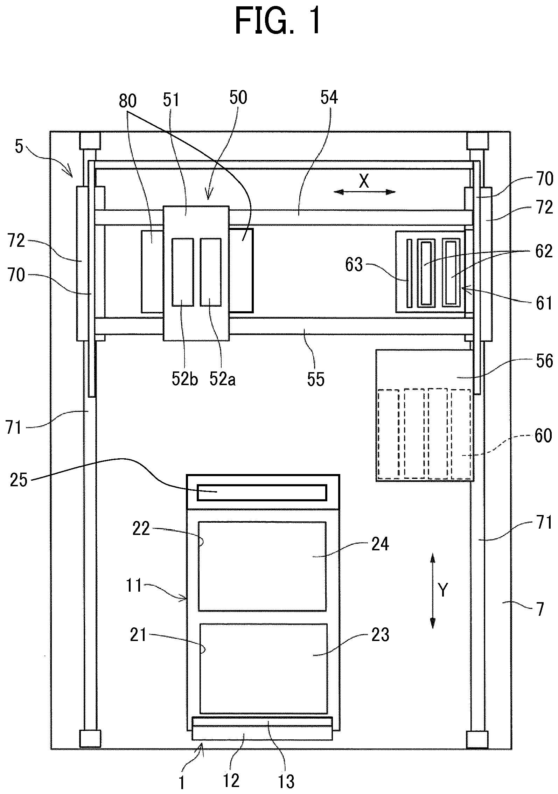

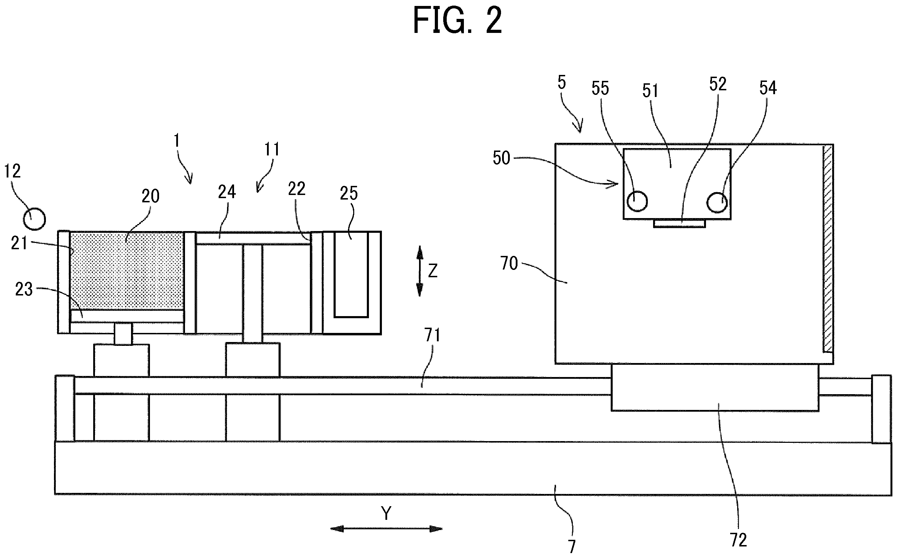

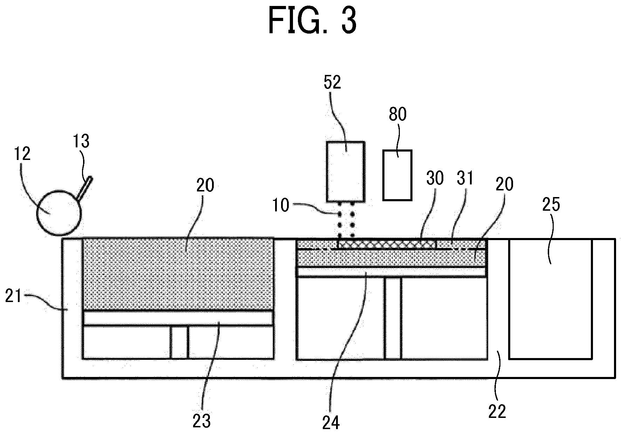

A method for fabricating an object and an apparatus for fabricating an object according to an embodiment of the present disclosure will be described with reference to FIGS. 1 to 3. FIG. 1 is a plan view for schematically explaining the apparatus for fabricating an object according to the present embodiment, and FIG. 2 is a side view for schematically explaining the apparatus. FIG. 3 is a cross-sectional view for schematically explaining the apparatus, and is a view for schematically explaining the method for fabricating an object according to the present embodiment. FIG. 3 illustrates one time point during fabrication.

The apparatus for fabricating an object according to the present embodiment is a powder lamination fabricating apparatus, and includes a fabricator 1 to form a fabrication layer 30 including a layered fabrication object in which particles of powder are bonded, and a fabrication unit 5 to discharge a droplet 10 of a fabricating liquid (also referred to as a fabrication liquid or the like) onto a powder layer 31 spread in a layered shape in the fabricator 1 and to apply the droplet 10 to the powder layer 31 to fabricate a stereoscopic fabrication object

The fabricator 1 includes a powder chamber 11, a flattening roller 12 including a flattening member (recoater) as a rotating body, and the like. The flattening member may include, for example, a plate-like member (blade) instead of the rotating body.

The powder chamber 11 includes a supply chamber 21 to supply powder 20 and a fabrication chamber 22 in which the fabrication layer 30 is laminated and a stereoscopic fabrication object is fabricated. Powder is supplied to the supply chamber 21 before fabrication.

A bottom of the supply chamber 21 can be raised and lowered in the vertical direction (height direction) as a supply stage 23. Similarly, a bottom of the fabrication chamber 22 can be raised and lowered in the vertical direction (height direction) as a fabrication stage 24. On the fabrication stage 24, a stereoscopic fabrication object in which the fabrication layer 30 is laminated is fabricated.

The supply stage 23 and the fabrication stage 24 are raised and lowered in an arrow Z direction (height direction) by a motor.

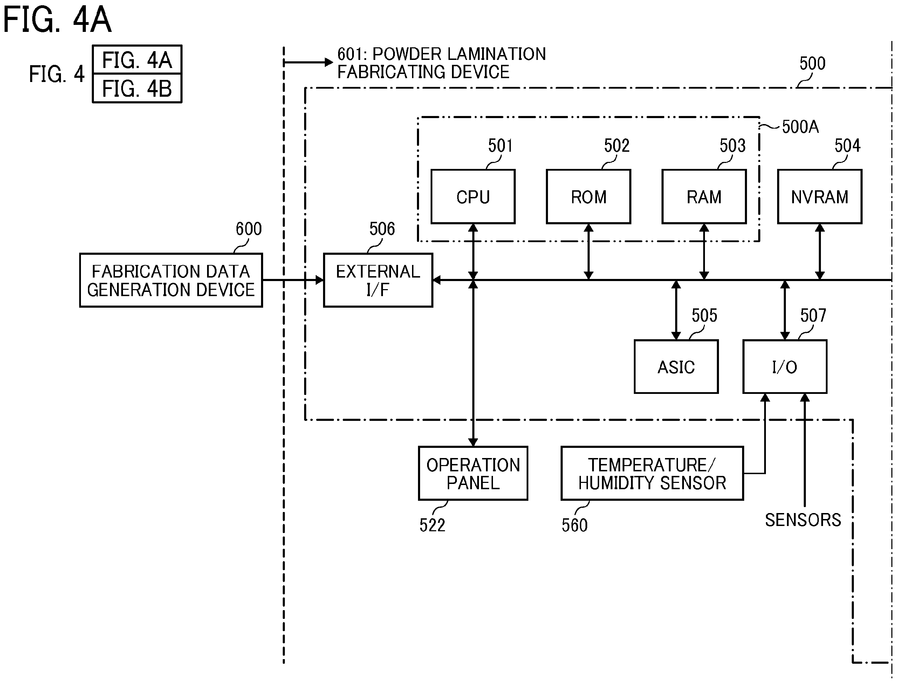

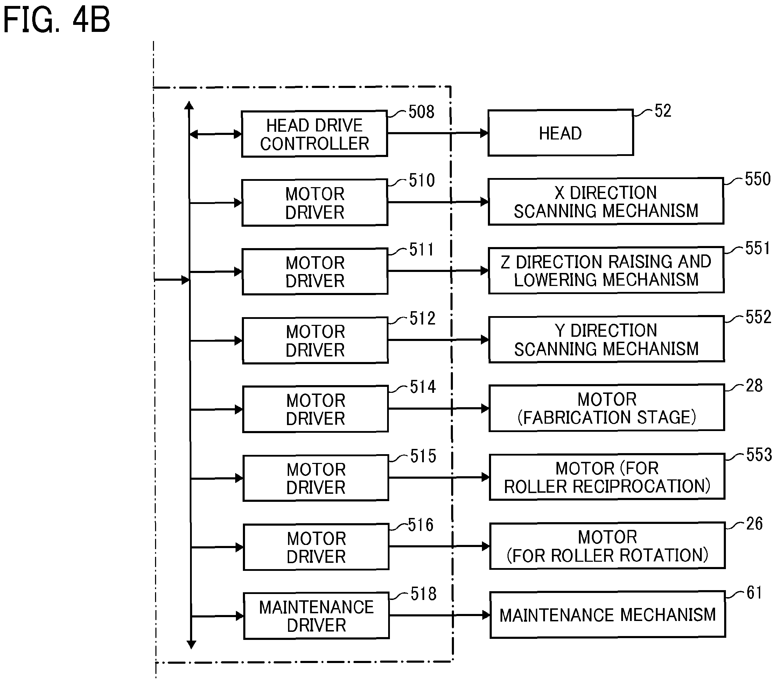

The flattening roller 12 supplies the powder 20 supplied onto the supply stage 23 of the supply chamber 21 to the fabrication chamber 22, and smooths and flattens a surface of a layer of the powder supplied by the flattening roller 12 as a flattening unit to form the powder layer 31. The flattening roller 12 is disposed so as to be capable of reciprocating in an arrow Y direction along a stage surface (surface on which the powder 20 is placed) of the fabrication stage 24 relatively to the stage surface and is moved by a reciprocating mechanism. The flattening roller 12 is rotationally driven by a motor 26 (see FIG. 4).

Meanwhile, the fabrication unit 5 includes a liquid discharge unit 50 as an applier or applying means to discharge the droplet 10 onto the powder layer 31 on the fabrication stage 24. The liquid discharge unit 50 includes a carriage 51 and two (one or three or more) liquid discharge heads (hereinafter, simply referred to as "heads") 52a and 52b which are discharge units mounted on the carriage 51.

The carriage 51 is movably held by guide members 54 and 55. The guide members 54 and 55 are held by side plates 70 on both sides so as to be raised and lowered. The carriage 51 is reciprocated in an arrow X direction (hereinafter, simply referred to as "X direction", the same applies to Y and Z as the other directions) which is a main scanning direction via a pulley and a belt by an X direction scanning motor constituting an X direction scanning mechanism 550.

In each of the two heads 52a and 52b (hereinafter, referred to as "head 52" when not distinguished), a plurality of nozzle rows in which a plurality of nozzles to discharge a liquid is arranged is disposed. The nozzle row of the head 52 discharges a fabrication liquid (ink) containing a radiation absorber. The nozzle row of each of the head 52a and the head 52b can also discharge a fabrication liquid (fabrication liquid containing a radiation absorber) with a color such as cyan, magenta, yellow, or black. The configuration of the head is not limited thereto.

A plurality of tanks 60 containing the fabrication liquids, respectively, is mounted on a tank mounting unit 56, and the fabrication liquids are supplied to the heads 52a and 52b via a supply tube or the like.

A maintenance mechanism 61 to maintain and recover the head 52 of the liquid discharge unit 50 is disposed on one side in the X direction.

The head includes radiant energy sources 80 on left and right thereof. It may also be possible to dispose the radiant energy source 80 only on either side. The radiant energy source 80 is driven on a region onto which the fabrication liquid (ink containing a radiation absorber) has been discharged from the head 52. The radiant energy source 80 can share the drive with the head 52 by being included in the carriage 51, but can be driven alone in the X direction by preparing a drive source individually.

The maintenance mechanism 61 mainly includes a cap 62 and a wiper 63. The cap 62 is brought into close contact with a nozzle surface (surface on which a nozzle is formed) of the head 52, and the fabrication liquid is sucked from the nozzle. This is for discharging the powder with which the nozzle is clogged and discharging the fabrication liquid having higher viscosity. Thereafter, the nozzle surface is wiped with a wiper 63 in order to form a meniscus of the nozzle (the inside of the nozzle is under negative pressure). The maintenance mechanism 61 covers the nozzle surface of the head with the cap 62 when the fabrication liquid is not discharged, and prevents mixing of the powder 20 into the nozzle and drying of the droplet 10.

The fabrication unit 5 includes a slider 72 movably held by the guide member 71 disposed on the base 7, and the entire fabrication unit 5 can be reciprocated in the Y direction (sub-scanning direction) orthogonal to the X direction. The entire fabrication unit 5 is reciprocated in the Y direction by a Y direction scanning motor constituting a Y direction scanning mechanism 552.

The liquid discharge unit 50 is disposed so as to be raised and lowered in an arrow Z direction together with the guide members 54 and 55, and is raised and lowered in the Z direction by a Z direction scanning motor constituting a Z direction raising and lowering mechanism 551 (see FIG. 4).

Next, details of the fabricator 1 will be described.

The fabricator 1 includes the powder chamber 11. The powder chamber 11 has a box shape and includes three chambers of the supply chamber 21, the fabrication chamber 22, and a surplus powder receiving chamber 25 in which upper surfaces are open. Inside the supply chamber 21, the supply stage 23 is disposed so as to be raised and lowered. Inside the fabrication chamber 22, the fabrication stage 24 is disposed so as to be raised and lowered.

A side surface of the supply stage 23 is disposed in contact with an inner side surface of the supply chamber 21. A side surface of the fabrication stage 24 is disposed in contact with an inner side surface of the fabrication chamber 22. Upper surfaces of the supply stage 23 and the fabrication stage 24 are kept horizontal.

The flattening roller 12 transfers and supplies the powder 20 from the supply chamber 21 to the fabrication chamber 22 and smooths a surface to flatten the surface, thereby forming the powder layer 31 including layered powder having a predetermined thickness.

The flattening roller 12 includes a rod-like member longer than the inner sizes of the fabrication chamber 22 and the supply chamber 21 (that is, the width of a portion to which powder is supplied or a portion in which the powder is stock), and is reciprocated in the Y direction (sub-scanning direction) along a stage surface by a reciprocating mechanism.

The flattening roller 12 horizontally moves so as to pass above the supply chamber 21 and the fabrication chamber 22 from the outside of the supply chamber 21 while being rotated by the motor 26. As a result, the powder 20 is transferred and supplied onto the fabrication chamber 22. The powder 20 is flattened while the flattening roller 12 passes over the fabrication chamber 22 to form the powder layer 31.

As illustrated also in FIG. 3, a powder removal plate 13 including a powder removing member for removing the powder 20 attached to the flattening roller 12 in contact with a circumferential surface of the flattening roller 12 is disposed. The powder removal plate 13 moves along with the flattening roller 12 in a state of being in contact with the circumferential surface of the flattening roller 12. The powder removal plate 13 can be disposed in either a counter direction or a forward direction when the flattening roller 12 is rotated in a rotation direction during flattening.

In the present embodiment, the powder chamber 11 of the fabricator 1 includes two chambers of the supply chamber 21 and the fabrication chamber 22. However, only the fabrication chamber 22 may be disposed, and a powder supply device may supply powder to the fabrication chamber 22 to perform flattening with a flattening unit.

<Outline of controller and flow of fabrication>

Next, an outline of a controller in the apparatus for fabricating an object according to the present embodiment will be described with reference to FIG. 4. FIG. 4 including FIG. 4A and FIG. 4B is a block diagram of the controller.

A controller 500 includes a main controller 500A including a central processing unit (CPU) 501 to control the entire apparatus, a read only memory (ROM) 502 to store a program for causing the CPU 501 to execute control of a stereoscopically fabricating operation including control related to the fabricating method of the present embodiment and other fixed data, and a random access memory (RAM) 503 to temporarily store fabrication data and the like.

The controller 500 includes a non-volatile memory (NVRAM) 504 to hold data even while power of the apparatus is shut off. The controller 500 also includes an ASIC 505 to perform image processing for performing processing of various signals or the like on image data and processing an input/output signal for controlling the entire apparatus.

The controller 500 includes an interface (I/F) 506 to transmit and receive data and a signal used when receiving fabrication data from an external fabrication data generation device 600.

The fabrication data generation device 600 generates fabrication data such as slice data obtained by slicing an object in a final form (stereoscopic fabrication object) in each fabrication layer and is constituted by an information processing device such as a personal computer.

The controller 500 includes an input/output (I/O) 507 to capture detection signals of various sensors.

The controller 500 includes a head drive controller 508 to control the driving of the head 52 of the liquid discharge unit 50.

The controller 500 includes a motor driver 510 to drive a motor constituting the X direction scanning mechanism 550 to move the carriage 51 of the liquid discharge unit 50 in the X direction (main scanning direction), and a motor driver 512 to drive a motor constituting the Y direction scanning mechanism 552 to move the carriage 51 of the liquid discharge unit 50 in the Y direction (sub-scanning direction).

The controller 500 includes a motor driver 511 to drive a motor constituting the Z direction raising and lowering mechanism 551 to move (raise and lower) the carriage 51 of the liquid discharge unit 50 in the Z direction. In raising and lowering the carriage 51 in the arrow Z direction, the entire fabrication unit 5 can be raised and lowered.

The controller 500 includes a motor driver 513 to drive a motor 27 to raise and lower the supply stage 23, and a motor driver 514 to drive a motor 28 to raise and lower the fabrication stage 24.

The controller 500 includes a motor driver 515 to drive a motor 553 of a reciprocating mechanism to move the flattening roller 12, and a motor driver 516 to drive a motor 26 to rotationally drive the flattening roller 12.

The controller 500 includes a supply system driver to drive a powder supply device to supply the powder 20 to the supply chamber 21, and a maintenance driver 518 to drive the maintenance mechanism 61 of the liquid discharge unit 50.

To the I/O 507 of the controller 500, a detection signal of a temperature/humidity sensor 560 to detect temperature and humidity as environmental conditions of the apparatus and detection signals of other sensors are input.

To the controller 500, an operation panel 522 to input and display information necessary for the apparatus is connected.

The controller 500 receives fabrication data from the fabrication data generation device 600. The fabrication data includes shape data (fabrication data) of each fabrication layer 30 as slice data obtained by slicing the shape of a target stereoscopic fabrication object.

The main controller 500A performs control to cause the head 52 to discharge the fabrication liquid based on the fabrication data of the fabrication layer 30.

The fabrication data generation device 600 and a stereoscopically fabricating device (powder lamination fabricating device) 601 form a fabricating apparatus.

Next, the method for fabricating an object according to the present embodiment will be described in more detail.

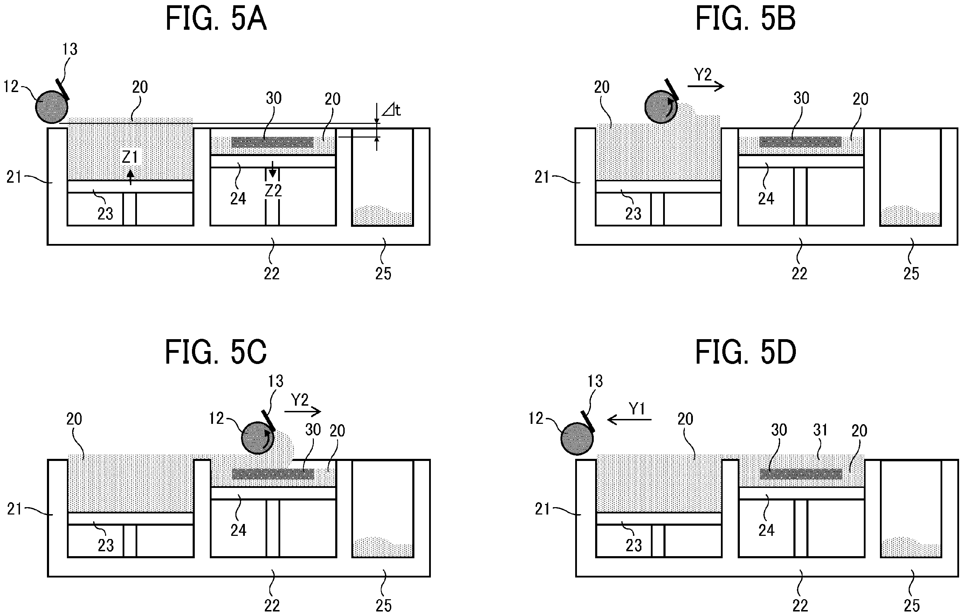

A flow of fabrication in the method for fabricating an object according to the present embodiment will be described with reference to FIGS. 5A to 5F.

FIGS. 5A to 5F are schematic explanatory views for explaining the flow of fabrication. Here, first, a state in which a first fabrication layer 30 is formed on the fabrication stage 24 of the fabrication chamber 22 will be described.

When a next fabrication layer 30 is formed on the first fabrication layer 30, as illustrated in FIG. 5A, the supply stage 23 of the supply chamber 21 is raised in a Z1 direction, and the fabrication stage 24 of the fabrication chamber 22 is lowered in a Z2 direction.

At this time, a lowering distance of the fabrication stage 24 is set such that a space between an upper surface (surface of a powder layer) of the fabrication chamber 22 and a lower portion (lower tangent portion) of the flattening roller 12 is $\Delta t$. The space $\Delta t$ corresponds to the thickness of the powder layer 31 to be formed next. The space $\Delta t$ is preferably about several tens $\mu m$ to 100 $\mu m$.

Subsequently, as illustrated in FIG. 5B, the powder 20 located above the upper surface level of the supply chamber 21 is moved in a Y2 direction (to a side of the fabrication chamber 22) while the flattening roller 12 is rotated in a forward direction (arrow direction) to transfer and supply the powder 20 to the fabrication chamber 22 (powder supply).

Furthermore, as illustrated in FIG. 5C, the flattening roller 12 is moved in parallel with the stage surface of the fabrication stage 24 of the fabrication chamber 22 to form, as illustrated in FIG. 5D, the powder layer 31 having a predetermined thickness $\Delta t$ on the fabrication layer 30 of the fabrication stage 24 (flattening). After the powder layer 31 is formed, the flattening roller 12 is moved in the Y1 direction and returned to the initial position as illustrated in FIG. 5D.

Here, the flattening roller 12 can move while maintaining a constant distance from the upper surface levels of the fabrication chamber 22 and the supply chamber 21. The flattening roller 12 can move while maintaining a constant distance therefrom. Therefore, while transporting the powder 20 onto the fabrication chamber 22 by the flattening roller 12, the powder layer 31 having a uniform thickness h (corresponding to the lamination pitch $\Delta t$) can be formed on the fabrication chamber 22 or on the fabrication layer 30 that has been already formed.

Hereinafter, the thickness h of the powder layer 31 and the lamination pitch $\Delta t1$ may be described without distinction, but mean the same thickness unless otherwise particularly specified. The thickness h of the powder layer 31 may be determined by actual measurement. In this case, it is preferable to use an average value at a plurality of places as the thickness h.

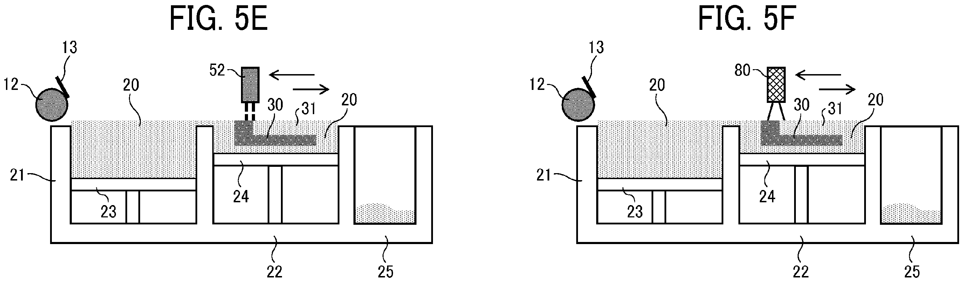

Thereafter, as illustrated in FIG. 5E, a droplet of the fabricating liquid (fabrication liquid) is discharged from the head 52 of the liquid discharge unit 50.

As illustrated in FIG. 5F, by driving the radiant energy source on the fabrication chamber, heat is increased by the radiation absorber in the powder, and particles of the powder are melted and bonded to obtain a single layer of a fabrication object (fabrication layer 30).

Subsequently, the above-described step of forming the powder layer 31 by supplying and flattening powder, the above-described step of discharging a fabrication liquid by the head 52, and the above-described step of emitting radiant energy are repeated to form a new fabrication layer 30. At this time, the new fabrication layer 30 and a fabrication layer 30 thereunder are integrated to constitute a part of a three-dimensional fabrication object.

Thereafter, the step of forming the powder layer 31 by supplying and flattening powder, the step of discharging a fabrication liquid by the head 52, and the step of emitting radiant energy are repeated as many times as necessary to complete a three-dimensional fabrication object (stereoscopic fabrication object).

<Fabricating powder and fabricating liquid>

Next, a fabricating powder and a fabricating liquid according to an embodiment of the present disclosure will be described.

The fabricating powder is not particularly limited, and can be changed appropriately. Examples of the fabricating powder include what includes a base material.

«Base material»

The base material is not particularly limited as long as having a powder form or a particle form, and can be appropriately selected according to a purpose. Examples of a material of the base material include a metal, ceramic, glass, carbon, a polymer, wood, a biocompatibility material, sand, a magnetic material, and a resin.

As these base materials, commercially available materials can be used.

The average particle diameter of the base material is not particularly limited and may be appropriately selected according to a purpose. For example, the average particle diameter is preferably 2 $\mu$m to 100 $\mu$m, and more preferably 8 $\mu$m to 50 $\mu$m.

A particle size distribution of the base material is not particularly limited and can be appropriately selected according to a purpose. However, a sharper particle size distribution is more preferable. The average particle diameter of the base material can be measured using a known particle diameter measuring device, and examples thereof include a particle diameter distribution measuring device Microtrac MT3000II series (manufactured by MicrotrackBEL Corporation).

The base material can be manufactured by a conventionally known method. Examples of a method for fabricating a base material in a powder form or a particle form include a pulverization method for applying compression, impact, friction, or the like to a solid to subdivide the solid, an atomization method for spraying a molten metal to obtain a quenched powder, a precipitation method for precipitating a component dissolved in a liquid, and a vapor phase reaction method for performing vaporization and crystallization.

The method for fabricating a base material is not limited, but the atomization method is more preferable which makes it possible to obtain a spherical shape and makes variation in particle diameter small. Examples of the atomization method include a water atomization method, a gas atomization method, a centrifugal atomization method, and a plasma atomization method, and any one of these methods is suitably used.

«Other components of fabricating powder»

The fabricating powder also contains other components. The other components are not particularly limited, and can be appropriately selected according to a purpose. Examples of the other components include a filler, a leveling agent, and a sintering auxiliary agent.

«<Filler»>

The filler is a material effective mainly to be attached to a surface of the fabricating powder or to be filled in voids between particles of a powder material. As an effect, for example, flowability of the fabricating powder is improved, contact points between particles of the powder material are increased, and voids can be reduced. Therefore, an effect of enhancing the strength and dimensional accuracy of a fabricated object may be obtained, and the filler is effective.

«<Leveling agent»>

The leveling agent is a material effective mainly to control wettability of a surface of the fabricating powder. As an effect, for example, permeability of the fabricating liquid to the powder layer can be enhanced, the strength of a fabricated object can be increased, and the speed thereof can be increased. The leveling agent may be effective in maintaining the shape stably.

<<<Sintering auxiliary agent>>>

The sintering auxiliary agent is a material effective in enhancing sintering efficiency when an obtained fabrication object is sintered. As an effect, for example, it may be possible to improve the strength of a fabricated object, to lower a sintering temperature, or to shorten sintering time.

«Liquid component of fabricating liquid>

The fabricating liquid of the present embodiment contains a liquid component because being a liquid at normal temperature. The liquid component can be changed appropriately. Water and a water-soluble solvent are used suitably, and in particular, water is used as a main component.

The fabricating liquid of the present embodiment contains a radiation absorber.

The ratio of water with respect to the entire fabricating liquid is preferably 40% by mass or more and 85% by mass or less, and more preferably 50% by mass or more and 80% by mass or less. Within the above range, an ink jet nozzle can be prevented from drying during standby, and liquid clogging and nozzle slipping can be suppressed.

The water-soluble solvent is effective in enhancing moisture holding power and discharge stability particularly when the fabricating liquid is discharged using an inkjet nozzle. If moisture holding power and discharge stability are decreased, the nozzle may be dried, discharge may become unstable, or liquid clogging may occur to decrease the strength or dimensional accuracy of a fabricated object. Many of these water-soluble solvents have higher viscosity and boiling point than water, and are effective because the water-soluble solvents can also function as a wetting agent, an anti-drying agent, and a viscosity-adjusting agent particularly for the fabricating liquid.

The water-soluble solvent is not particularly limited as long as being a liquid material exhibiting water solubility, and can be appropriately changed. Examples thereof include an alcohol such as ethanol, propanol, or butanol, an ether, and a ketone. Specific examples thereof include 1,2,6-hexanetriol, 1,2-butanediol, 1,2-hexanediol, 2-pentanediol, 1,3-dimethyl-2-imidazolidinone, 1,3-butanediol, 1,3-propanediol, 1,4-butanediol, 1,5-pentanediol, 1,6-hexanediol, 2,2-dimethyl-1,3-propanediol, 2,3-butanediol, 2,4-pentanediol, 2,5-hexanediol, 2-ethyl-1,3-hexanediol, 2-pyrrolidone, 2-methyl-1,3-propanediol, 2-methyl-2,4-pentanediol, 3-methyl-1,3-butanediol, 3-methyl-1,3-hexanediol, N-methyl-2-pyrrolidone, N-methylpyrrolidinone, β-butoxy-N,N-dimethylpropionamide, β-methoxy-N,N-dimethylpropionamide, γ-butyrolactone, ε-caprolactam, ethylene glycol, ethylene glycol-n-butyl ether, ethylene glycol-n-propyl ether, ethylene glycol phenyl ether, ethylene glycol mono-2-ethyl hexyl ether, ethylene glycol monoethyl ether, glycerin, diethylene glycol, diethylene glycol-n-hexyl ether, diethylene glycol methyl ether, diethylene glycol monoethyl ether, diethylene glycol monobutyl ether, diethylene glycol monomethyl ether, diglycerin, dipropylene glycol, dipropylene glycol n-propyl ether, dipropylene glycol mono methyl ether, dimethyl sulfoxide, sulfolane, thiodiglycol, tetraethylene glycol, triethylene glycol, triethylene glycol ethyl ether, triethylene glycol dimethyl ether, triethylene glycol monobutyl ether, triethylene glycol methyl ether, tripropylene glycol, tripropylene glycol-n-propyl ether, tripropylene glycol methyl ether, trimethylol ethane, trimethylol propane, propyl propylene diglycol, propylene glycol, propylene glycol-n-butyl ether, propylene glycol-t-butyl ether, propylene glycol phenyl ether, propylene glycol monoethyl ether, hexylene glycol, polyethylene glycol, and polypropylene glycol. However, these are examples, and the water-soluble solvent is not limited thereto.

The ratio of the water-soluble solvent with respect to the entire fabricating liquid is preferably 5% by mass to 60% by mass, more preferably 10% by mass to 50% by mass, and still more preferably 15% by mass to 40% by mass.

When the ratio is 5% by mass or more, the moisture holding power of the fabricating liquid can be made favorable, and it is possible to suppress progress of drying of an inkjet head to cause discharge failure during standby. In addition, it is possible to prevent the discharge amount from being different between the time of checking performed in advance and the time of actual discharge, and a fabricated object having desired strength and shape is easily obtained. When the ratio is 60% by mass or less, it is possible to prevent the viscosity of the fabricating liquid from becoming too high and to improve discharge stability. In addition, it is possible to prevent a decrease in the solubility of a resin in the fabricating powder and to prevent a decrease in the strength of a fabricated object. In addition, it is possible to prevent drying of a fabricated object from taking time, and to prevent a decrease in fabricating efficiency and deformation of the fabrication object.

«Radiation absorber»

As the radiation absorber, for example, an ink type formulation containing carbon black, such as an ink formulation known as CM997A commercially available from Hewlett-Packard Company, can be used. The radiation absorber can also contain potassium hydrogen phthalate (KHP), bone charcoal, graphite, a carbon fiber, chalk, or an interference pigment.

Furthermore, the radiation absorber can contain an infrared ray absorber, a near infrared ray absorber, a visible light absorber, a UV light absorber, and the like. Examples of an ink containing a visible light promoter include a dye-based colored ink and a pigment-based colored ink, such as inks known as CM993A and CE042A commercially available from Hewlett-Packard Company.

«Other components of fabricating liquid»

The fabricating liquid can contain, as other components, a conventionally known material such as a wetting agent, an anti-drying agent, a viscosity adjusting agent, a surfactant, a penetrant, a crosslinking agent, an antifoamer, a pH adjusting agent, an antiseptic agent, an antifungal agent, a colorant, a preservative, or a stabilizer without limitation.

<<<Surfactant>>>

The surfactant is used mainly for the purpose of controlling wettability, permeability and surface tension of the fabricating liquid to the fabricating powder. As the surfactant, a conventionally known material can be used, but an anionic surfactant, a nonionic surfactant, and an amphoteric surfactant are suitably used.

Examples of the anionic surfactant include a polyoxyethylene alkyl ether acetate, a dodecylbenzene sulfonate, a succinate sulfonate, a laurate, and a polyoxyethylene alkyl ether sulfate.

Examples of the nonionic surfactant include a polyoxyethylene alkyl ether, a polyoxyethylene polyoxypropylene alkyl ether, a polyoxyethylene alkyl ester, a polyoxyethylene polyoxypropylene alkyl ester, a polyoxyethylene sorbitan fatty acid ester, a polyoxyethylene alkylphenyl ether, a polyoxyethylene alkylamine, and a polyoxyethylene alkylamide.

Examples of the amphoteric surfactant include a lauryl aminopropionate, lauryl dimethyl betaine, stearyl dimethyl betaine, and lauryl dihydroxyethyl betaine.

As specific examples, those listed below are suitably used, but the surfactant is not limited thereto. Examples thereof include lauryldimethylamine oxide, myristyl dimethylamine oxide, stearyldimethylamine oxide, dihydroxyethyl laurylamine oxide, polyoxyethylene coconut oil alkyldimethylamine oxide, dimethylalkyl (coco) betaine, and dimethyl laurylbetaine.

These surfactants are available from surfactant manufacturers such as Nikko Chemicals Co. Ltd., Nihon Emulsion Co. Ltd., Nippon Shokubai Co. Ltd., Toho Chemical Industry Co. Ltd., Kao Corporation, Adeka Corporation, Lion Corporation, Aoki Oil Industrial Co. Ltd., and Sanyo Chemical Industries, Ltd. As an acetylene glycol-based surfactant, an acetylene glycol-based compound such as 2,4,7,9-tetramethyl-5-decyne-4,7-diol, 3,6-dimethyl-4-octin-3,6-diol, or 3,5-dimethyl-1-hexyn-3-ol (for example, Surfynol 104, 82, 465, and 485 or TG available from Air Products, Inc. (USA)) can be used, but in particular, Surfynol 465 and 104 and TG are preferable.

Examples of a fluorine-based surfactant include a perfluoroalkyl sulfonate, a perfluoroalkyl carboxylate, a perfluoroalkyl phosphate, a perfluoroalkyl ethylene oxide adduct, a perfluoroalkyl betaine, a perfluoroalkylamine oxide compound, a polyoxyalkylene ether polymer having a perfluoroalkyl ether group in a side chain thereof and a sulfate thereof, and a fluorine-based aliphatic polymer ester.

Examples of a commercially available fluorine-based surfactant include Surfron S-111, S-112, S-113, S121, S131, S132, S-141, and S-145 (manufactured by AGC Inc.), Flurade FC-93, FC-95, FC-98, FC-129, FC-135, FC-170C, FC-430, FC-431, and FC-4430 (manufactured by Sumitomo 3M), FT-110, 250, 251, and 400S (manufactured by Neos Corporation), Zonyl FS-62, FSA, FSE, FSJ, FSP, TBS, UR, FSO, FSO-100, FSN N, FSN-100, FS-300, and FSK (manufactured by Dupont), and PolyFox PF-136A, PF-156A, and PF-151N (manufactured by OMNOVA Solutions Inc.), and are available from the manufacturers.

The surfactant is not limited thereto, and a single surfactant or a mixture of a plurality of surfactants may be used. Even if a single surfactant is not easily dissolved in the fabricating liquid, by mixing the surfactant with another surfactant, the resulting mixture may be solubilized, and a stable liquid material may be obtained.

The content of the surfactant, as the total amount of the surfactant, with respect to the fabricating liquid is preferably 0.01% by mass to 10% by mass, more preferably 0.1 % by mass to 5% by mass, and still more preferably 0.5% by mass to 3% by mass. When the content is 0.01% by mass or more, a decrease in the permeability of the fabricating liquid into the fabricating powder can be prevented, and a decrease in the strength of a fabricated object can be prevented. When the content is 10% by mass or less, the permeability of the fabricating liquid can be properly controlled, and the dimensional accuracy of an obtained fabrication object can be improved.

<<<Antifoamer>>>

The antifoamer is used mainly for the purpose of preventing foaming of the fabricating liquid. As the antifoamer, a generally used antifoamer can be used. Examples thereof include a silicone antifoamer, a polyether antifoamer, and a fatty acid ester antifoamer. One type thereof may be used, or two or more types thereof may be used together.

As the antifoamer, a commercially available product may be used. Examples thereof include a silicone antifoamer manufactured by Shin-Etsu Chemical Co., Ltd. (KS508, KS531, KM72, KM85, or the like), a silicone antifoamer manufactured by The Dow Corning Toray Co., Ltd. (Q2-3183A, SH5510, or the like), a silicone antifoamer manufactured by Nippon Unicar Company, Limited. (SAG30 or the like), and an antifoamer manufactured by Asahi Denka Kogyo Co., Ltd. (Adekanate series and the like).

The content of the antifoamer with respect to the fabricating liquid is preferably 3% by mass or less, and more preferably 0.5% by mass or less. When the amount of the antifoamer added is more than this amount, solubility may decrease to cause separation and precipitation.

<<<pH adjusting agent>>>

The pH adjusting agent is used mainly for the purpose of adjusting the pH of the fabricating liquid to a desired pH. As the pH adjusting agent, any material can be used as long as being able to control the pH of the fabricating liquid.

When an inkjet method is used as a discharge method of the apparatus for fabricating an object, a pH of 5 (weakly acidic) to 12 (basic) is preferable, and a pH of 8 to 10 (weakly basic) is more preferable from a viewpoint of preventing corrosion and clogging of a nozzle head portion. The pH of the fabricating liquid can be arbitrarily adjusted by addition of the pH adjusting agent. Some crosslinking agents may also function as the pH adjusting agent.

Examples of the pH adjusting agent include an amine, an alkali metal hydroxide, a quaternary compound hydroxide, and an alkali metal carbonate when the pH is adjusted to basicity. Examples of the pH adjusting agent include an inorganic acid and an organic acid when the pH is adjusted to acidity. Specific examples thereof include an amine such as diethanolamine or triethanolamine, a hydroxide of an alkali metal element such as lithium hydroxide, sodium hydroxide, or potassium hydroxide, ammonium hydroxide, a quaternary ammonium hydroxide, a quaternary phosphonium hydroxide, and a carbonate of an alkali metal such as lithium carbonate, sodium carbonate, or potassium carbonate.

Examples thereof further include a salt formed by an inorganic acid such as hydrochloric acid, sulfuric acid, nitric acid, phosphoric acid, or boric acid and a monovalent weak cation such as ammonium sulfate or ammonium phosphate, and an organic acid such as acetic acid, oxalic acid, lactic acid, salicylic acid, benzoic acid, glucuronic acid, ascorbic acid, arginine acid, cysteine, oxalic acid, fumaric acid, maleic acid, malonic acid, lysine, malic acid, citric acid, glycine, glutamic acid, succinic acid, tartaric acid, phthalic acid, pyrrolidone carboxylic acid, pyrone carboxylic acid, pyrrole carboxylic acid, furan carboxylic acid, pyridine carboxylic acid, coumaric acid, thiophene carboxylic acid, nicotinic acid, carborane acid, or derivatives thereof. These pH adjusting agents are not limited to the above compounds.

Among these pH adjusting agents, one having an optimum temporary dissociation constant pKa is used as appropriate depending on characteristics of the fabricating liquid according to fluctuation of the pH, and may be used singly or in combination of two or more types thereof, and a Buffer agent may be used together.

<<<Antiseptic and antifungal agent>>>

The antiseptic and antifungal agent is used mainly for the purpose of preventing corrosion and fungi of the fabricating liquid. When the fabricating liquid is stored, microorganisms may grow to cause a decrease in pH, sedimentation of components, and the like, and the antiseptic and antifungal agent can prevent this.

Examples of the antiseptic and antifungal agent include sodium benzoate, sodium dehydroacetate, potassium sorbitanate, sodium sorbate, thiabendazole, benzimidazole, 2-pyridinethiol 1-oxide sodium, and sodium pentachlorophenol.

«Method for adjusting fabricating liquid»

A method for preparing the fabricating liquid is not particularly limited, and can be appropriately selected according to a purpose. Examples thereof include a method for adding a radiation absorber and, if necessary, other components to a liquid component such as water or a water-soluble solvent, and mixing and stirring the resulting mixture.

«Example of action of fabricating powder and fabricating liquid»

For example, by using the fabricating powder and the fabricating liquid as described above, a thin layer (powder layer) is formed using the fabricating powder, the fabricating liquid containing a radiation absorber is applied to the powder layer, and then radiant energy is applied to the powder layer. As a result, particles of the powder are melted and bonded to form a fabrication layer.

<Penetration behavior of fabricating liquid>

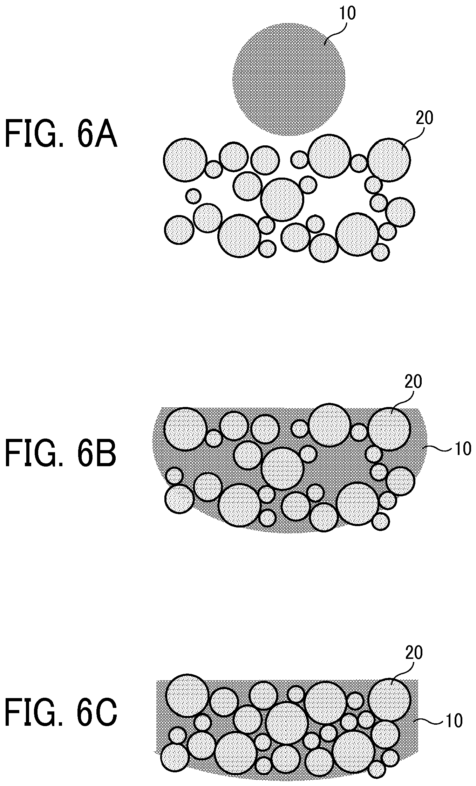

Next, a permeation behavior of the fabricating liquid will be described with reference to FIGS. 6A, 6B, and 6C. FIGS. 6A, 6B, and 6C schematically illustrate the droplet 10 of the fabricating liquid and the powder 20 of the fabricating powder in an enlarged manner.

The powder 20 transferred and supplied from the supply chamber 21 to the fabrication chamber 22 by the flattening roller 12 is deposited in the fabrication chamber 22 at a density close to the bulk density thereof although depending on a material thereof and a particle size distribution thereof. While the droplet 10 discharged from the head 52 is penetrating in the XY direction and the Z direction, in the powder 20 deposited in the fabrication chamber 22, a liquid crosslinking force acts between particles, and a distance between the particles is reduced by pushing out air present between the particles to increase the density of the powder in a fabrication liquid application portion.

The above is schematically illustrated in FIGS. 6A, 6B, and 6C. FIG. 6A is a diagram when the droplet 10 of the fabricating liquid is discharged onto the powder 20 in the powder layer, and FIG. 6B is a diagram when the droplet 10 has landed on the powder layer. As illustrated, due to surface tension of the liquid, the fabricating liquid ideally penetrates so as to form a shape close to a hemisphere or an elliptical hemisphere. For example, when discharge of the fabricating liquid by inkjet is considered, if the surface tension of the fabricating liquid is, for example, 20 mN/m to 40 mN/m, wetting spread occurs more easily as the surface tension is lower. Therefore, a hemisphere or a laterally long elliptical hemisphere is easily formed.

Then, as illustrated in FIG. 6C, while the droplet 10 is penetrating, the distance between the particles of the powder 20 is reduced by liquid crosslinking, and the particles of the powder 20 are aggregated.

The XY direction indicates a surface direction of the powder layer, and the Z direction indicates a direction perpendicular to the surface direction.

<First Embodiment>

Hereinafter, a method for fabricating an object according to a first embodiment of the present embodiment will be described.

Before a method for fabricating an object according to an embodiment of the present disclosure is described, in order to clarify effects of the method for fabricating an object according to an embodiment of the present disclosure, first, problems in related art will be described.

«Problems in related art»

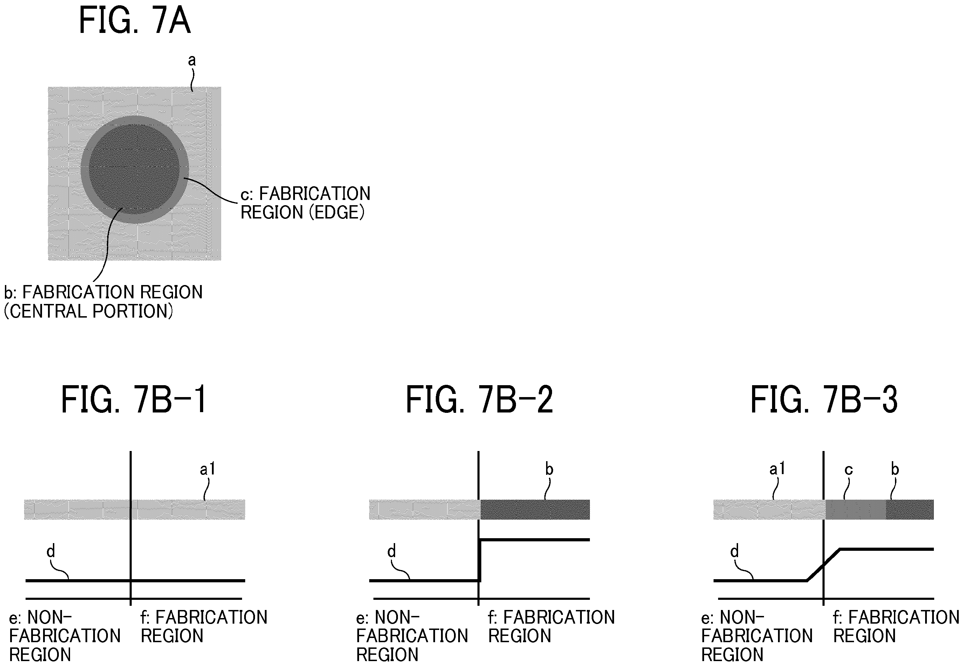

FIGS. 7A, 7B-1, 7B-2, 7B-3, 8, and 9 are schematic views or diagrams for explaining problems in related art. FIGS. 7A, 7B-1, 7B-2, 7B-3, and 8 are schematic views or diagrams illustrating an example of an image diagram in which a part including a fabrication region in one fabrication layer is cut out. FIGS. 7A, 7B-1, 7B-2, 7B-3, and 8 are created by cutting out only a part of a fabrication region in contact with a non-fabrication region as an image diagram in one fabricated fabrication layer so as to make a difference between the non-fabrication region and the fabrication region clear.

FIGS. 9A, 9B, and 9C are schematic diagrams for explaining an example of a permeation behavior of the fabricating liquid.

FIG. 7A illustrates a plan view viewed from an upper surface of the powder layer. FIG. 7A depicts: a surface a viewed from above the powder layer; a central region b of a fabrication region excluding an edge region c of the fabrication region formed by applying droplets to the powder layer. The edge region c of the fabrication region is adjacent to a non-fabrication region in the powder layer.

FIG. 7B-1, 7B-2, and 7B-3 are schematic diagrams illustrating temperature states at a boundary between the fabrication region and the non-fabrication region after a flattening (recoating) step (FIG. 7B-1), after a step of applying radiant energy (FIG. 7B-2), and after time elapses (FIG. 7B-3), respectively. FIGS. 7B-1, 7B-2, and 7B-3 depict the powder layer a1. The central region b and the edge region c in FIGS. 7B-2 and 7B-3 correspond to the central region b and the edge region c in FIG. 7A. FIGS. 7B-1, 7B-2, and 7B-3 further depict the temperature d in each region of the powder layer, the non-fabrication region e, and the fabrication region f.

After the recoating step, when a radiation absorber-containing droplet is discharged onto the powder layer and radiant energy is applied to a region to which the droplet has been applied to form the fabrication region, the temperature in the fabrication region rises as illustrated in FIG. 7B-2 as compared to the non-shaped region. However, after the radiant energy is applied, if time elapses, in an edge region of the fabrication region in contact with the non-fabrication region, heat increased by absorbing the radiant energy is transmitted to the non-fabrication region to lower the temperature. As a result, the temperature does not reach a heat temperature originally required for bonding of particles of the powder, and the bonding is weakened. Therefore, strength and accuracy as a fabricated object are lowered.

In the case as illustrated in FIGS. 7A, 7B-1, 7B-2, and 7B-3, in the edge region of the fabrication region, the strength and accuracy are lowered.

Next, FIG. 8 illustrates a result of a measurement method in a comparative example, obtained by increasing the droplet amount in the edge region of the fabrication region (increasing the droplet size), applying radiant energy, and measuring a temperature state at a boundary between the fabrication region and the non-fabrication region after time elapses. FIGS. 9A, 9B, and 9C illustrate a permeation behavior of the fabricating liquid in the measurement method in the comparative example.

The measurement method in the comparative example will be described with reference to FIGS. 8 and 9.

FIG. 8 depicts temperature d in each region of the powder layer, a non-fabrication region e, a fabrication region f, a radiant energy source g, a region h not to be irradiated with radiant energy, a region j to be irradiated with radiant energy, and bonding temperature t.

FIG. 8 is a diagram schematically illustrating how fabrication is performed in the k-th powder layer with a cross-sectional view. From above the powder layer, the radiation energy source irradiates only the fabrication region (region where a fabrication droplet is dropped) with energy.

In the fabrication region where a droplet containing a radiation absorber has been dropped, the radiant energy is absorbed and the temperature rises. Although depending on the type of a powder material, when the bonding temperature of each material is reached, particles of the powder are bonded to form a fabricated object.

When the droplet amount in the edge of the fabrication region is increased as in the measurement method in the comparative example, the droplet amount containing a radiation absorber is increased. Therefore, during irradiation with radiant energy, an increase in heat in the edge region of the fabrication region is higher than that in the central portion. Therefore, even if a small amount of heat escapes to the non-fabrication region, sufficient heat can be maintained for bonding of particles of the powder in the edge region, and the strength of the fabrication object is secured.

However, in the measurement method in the comparative example, it has been found that the strength of a fabricated object can be secured, but the accuracy of the fabrication object cannot be improved because an ink spreads in a direction (XY direction) parallel to a lamination surface when a fabrication layer is laminated.

FIGS. 9A, 9B, and 9C illustrate a permeation behavior of the fabricating liquid in the measurement method in the comparative example.

FIG. 9A illustrates how a droplet of the fabrication liquid is dropped. FIG. 9B illustrates how the droplet penetrates the powder layer. FIG. 9C illustrates the droplet after penetrating the powder layer.

As in the ink penetration behavior illustrated by the k-th layer in FIGS. 9, in the measurement method in the comparative example, in order to increase the droplet amount in the edge region of the fabrication region, before the droplet permeates in a lamination direction of the powder layer (Z direction), bonding is performed between adjacent droplets, and a permeation distance in the lamination direction is shortened. Since the droplet amount is large, the liquid causes wetting spread into the non-fabrication region in the XY direction. As a result, the accuracy of a fabricated object in the X and Y directions is lowered.

As apparent from comparison of the result in FIG. 8 with the result of an embodiment of the present disclosure illustrated in FIG. 13, in FIG. 8, the edge region of the fabrication region extends to the non-fabrication region, and the layer temperature in the region is equal to or lower than the bonding temperature. That is, the result in FIG. 8 indicates that the fabrication region is larger than the target dimensions, and the accuracy of the fabrication layer in the edge region of the fabrication region is poor.

«Embodiments of the present disclosure»

In the present disclosure, in order to divide a fabrication region into a plurality of sections, for example, in a fabrication image of one powder layer, a pattern having the image divided can be prepared. The division size can be, for example, a minimum resolution interval. However, the division size is not limited to the minimum resolution interval.

FIG. 10 is a schematic view for explaining an example of a pattern for dividing a fabrication region on a surface of a powder layer. FIG. 10 illustrates a part of a divided image.

In FIG. 10, (i) illustrates a surface (plan view) viewed from above the powder layer. In FIG. 10, (ii) illustrates a schematic view of the divided fabrication image.

FIG. 10 depicts a surface a viewed from above the powder layer, a non-fabrication region e, a fabrication region e, and a minimum resolution u.

In the present embodiment, when the fabrication region is divided into a plurality of sections, a droplet is applied a plurality of times to a partial specific divided region among the divided regions.

In the present embodiment, a droplet is preferably applied a plurality of times to the edge region of the fabrication region adjacent to the non-fabrication region. In the present embodiment, the edge region of the fabrication region refers to a region near a boundary with the non-fabrication region in the fabrication region.

In the present embodiment, the number of times of application of a droplet to the specific divided region is preferably larger than the number of times of application of the droplet to another divided region.

Application of the droplet to the same place on a surface of the powder layer a plurality of times will be described.

The permeation behavior of the fabricating liquid in the present embodiment will be described with reference to FIGS. 11A-1, 11A-2, 11A-3, and 11A-4. FIGS. 11A-1, 11A-2, 11A-3, and 11A-4 are diagrams schematically illustrating how the fabricating liquid performs a permeation behavior when droplets of the fabricating liquid are applied (discharged) to the k-th layer with a cross-section.

FIGS. 11A-1, 11A-2, 11A-3, and 11A-4 are views illustrating how the droplets 10 are dropped onto the powder layer 31 and penetrate the powder layer 31.

As illustrated in FIGS. 11A-1, 11A-2, 11A-3, and 11A-4, the droplets 10 of the fabricating liquid are discharged onto the k-th layer of the powder 20 at a predetermined aggregating particles of the powder with a liquid crosslinking force.

In the present invention, as illustrated in FIGS. 11B-1 and 11B-2, if the thickness of the powder layer 31 is represented by h, and a distance between centers (a distance between closest dots) of the closest droplets 10 to land on the powder layer 31 is represented by L, discharge is performed such that $h < L$ is satisfied.

In the present embodiment, the discharged droplet 10 penetrates the k-th layer in the XY direction and the Z direction. However, by satisfying $h < L$, the droplet 10 sufficiently penetrates in the Z direction which is a lamination direction.

In order to secure the strength between laminated layers of a fabricated object, it is necessary for a droplet to penetrate the powder layer sufficiently by the thickness h. In order to allow a droplet to penetrate in the Z direction by the thickness h, $h < L$ is satisfied because it is necessary to prevent bonding with an adjacent droplet before penetrating in the Z direction.

The upper limit of L depends on a fabricating powder, a fabricating liquid, and the like, and therefore cannot be generally said, but is, for example, preferably 8h or less, and more preferably 4h or less.

In the present embodiment, a droplet is applied a plurality of times to a partial specific divided region of the fabrication region. However, in a case where a droplet is discharged a plurality of times such that the total discharge amount is the same, the droplet is more likely to penetrate in the Z direction than in the XY direction as compared to a case where one droplet is discharged. This is considered to be due to permeation in the Z direction before wetting spread of the fabricating liquid in the XY direction by combining with a droplet adjacent in the XY direction. It is possible to suppress wetting spread of the droplet in the XY direction, and the accuracy of a fabricated object is further improved.

In the present embodiment, a droplet is preferably applied (discharged) a plurality of times to the edge region of the fabrication region adjacent to the non-fabrication region.

The edge region will be described with reference to FIG. 12.

In FIG. 12, (i) illustrates a surface (plan view) viewed from above the powder layer. In FIG. 12, (ii) illustrates a schematic view of a divided fabrication image.

FIG. 12 depicts a surface a viewed from above the powder layer, a non-fabrication region e, a fabrication region f, a minimum resolution u, a central region b of the fabrication region, an edge region c of the fabrication region, and the thickness m of an edge in the edge region of the fabrication region.

The thickness m of the edge of the fabrication region is desirably set according to a fabrication mode or the type of each material such as a fabricating powder or a fabricating fabrication mode or the type of each material such as a fabricating powder or a fabricating liquid because the heat quantity to escape to the non-fabrication region differs depending on a material of the powder.

Next, application of radiant energy to the powder layer in the present embodiment will be described.

In the present embodiment, the radiation intensity applied to a range including at least the specific divided region can be preferably changed. The radiant energy is more preferably applied to the fabrication region such that the radiation intensity applied to a range including at least the specific divided region is higher than the radiation intensity applied to a divided region other than the specific divided region.

In particular, the edge region of the fabrication region where a droplet is discharged a plurality of times is desirably irradiated with radiant energy at a higher intensity. This is for increasing the radiant energy intensity to bond particles of the powder present in the thickness h because the discharge of a droplet a plurality of times makes the droplet penetrate in the thickness direction (Z direction) of the powder layer. By irradiating the edge region of the fabrication region where a droplet is discharged a plurality of times with radiant energy at a higher intensity, bonding between the k-th layer and the k-1-th layer of the powder layer also progresses, and the strength of a fabricated object can be secured more.

Radiant energy was applied at a higher intensity of the radiant energy to the edge region of the fabrication region where a droplet had been discharged a plurality of times, and a temperature state at a boundary between the fabrication region and the non-fabrication region was measured after time elapsed. FIG. 13 illustrates the result.

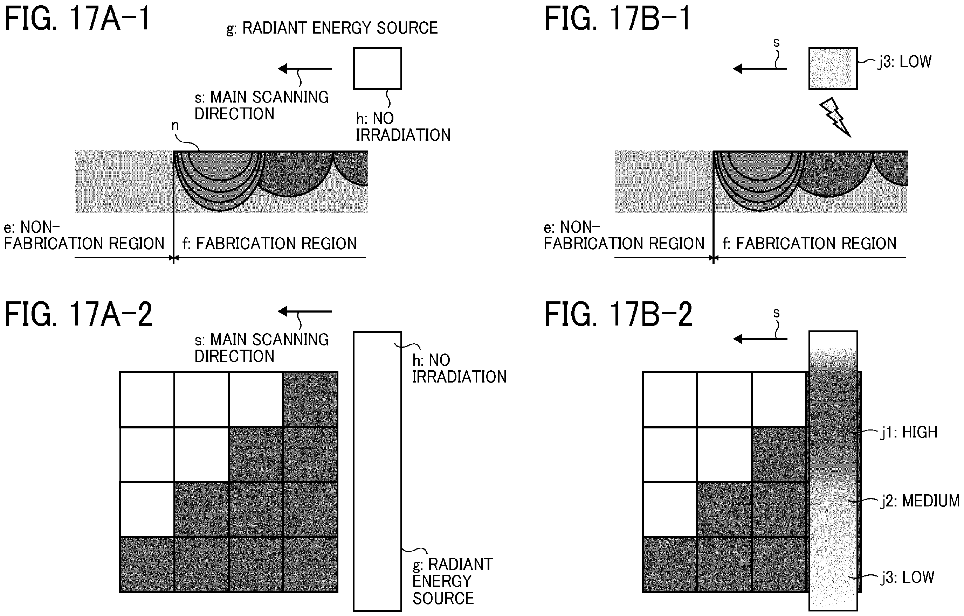

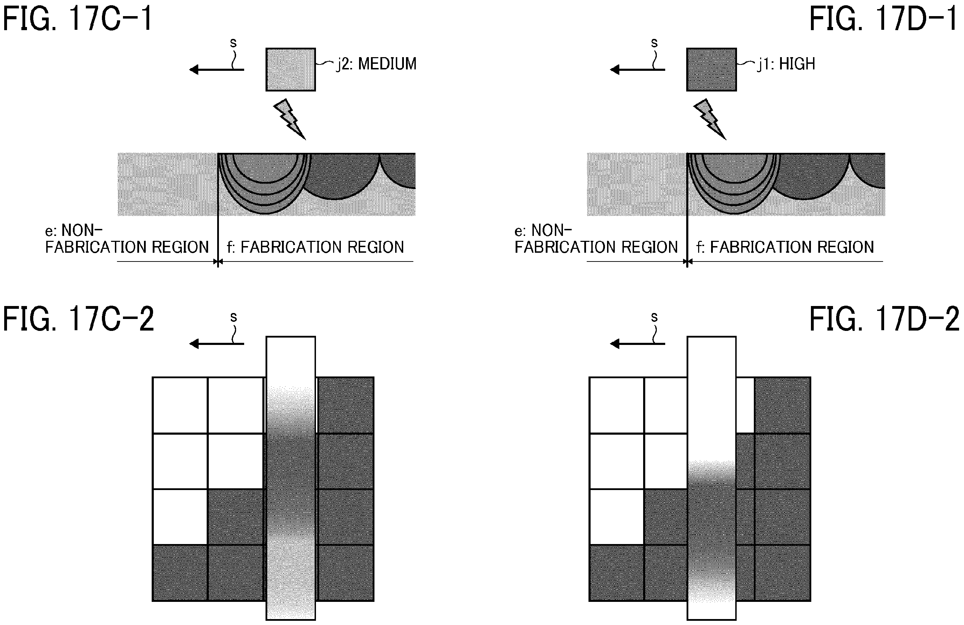

FIG. 13 (also the following FIGS. 15 and 17) was created by cutting out only a part of a fabrication region in contact with a non-fabrication region as an image diagram in one fabricated fabrication layer so as to make a difference between the non-fabrication region and the fabrication region clear.

FIG. 13 depicts temperature d in each region of the powder layer, the non-fabrication region e, the fabrication region f, a radiant energy source g, a region h not irradiated with radiant energy, a region j1 irradiated with radiant energy at a higher intensity of the radiant energy, a region j2 irradiated with radiant energy at a medium intensity of the radiant energy, a region j3 irradiated with radiant energy at a lower intensity of the radiant energy, and bonding temperature t.

FIG. 13 illustrates a schematic cross-sectional view illustrating how fabrication is performed in the k-th powder layer. From above the powder layer, the radiation energy source irradiates only the fabrication region (region where a fabrication droplet is dropped) with energy. However, regardless of the fabrication region or the non-fabrication region, a method for irradiating the entire surface of the powder layer with radiant energy may be adopted.

An effect of the present embodiment in which radiant energy is applied at a higher intensity of the radiant energy to the edge region of the fabrication region where a droplet has been discharged a plurality of times will be described with reference to FIGS. 14A and 14B.

FIGS. 14A and 14B depict the depth o in which a droplet penetrates in the thickness direction (Z direction) of the powder layer when the droplet is discharged once onto the edge region and the depth p in which a droplet penetrates in the thickness direction (Z direction) of the powder layer when the droplet is discharged a plurality of times onto the edge region.

When radiant energy is applied to the powder layer, the light quantity at a depth x of the powder layer is represented by the following formula (1).

[Formula 1]

$$I = Io \exp(-\mu x) \quad \cdots \quad \text{Formula (1)}$$

Io: Initial light quantity
I: Light quantity at depth x

For example, in a case where the intensity of radiant energy is not changed between the edge region and the fabrication region other than the edge region and the radiant energy is applied at a medium intensity (when the light quantity is constant), as illustrated by q1 in FIG. 14A, light does not reach the depth which a droplet has penetrated, and fabrication of the edge region is insufficient.

Meanwhile, in a case where the intensity of radiant energy is changed between the edge region and the fabrication region other than the edge region and the radiant energy is applied to the edge region at a higher intensity (when the light quantity of the edge is increased), a result illustrated by q2 in FIG. 14B is obtained. That is, light reaches the depth which a droplet has penetrated, bonding of particles of the powder in the edge region is sufficiently performed, and a strong fabrication layer is formed.

As described above, by applying radiant energy to the edge region of the fabrication region where a droplet has been discharged a plurality of times at a higher intensity of the radiant energy, it is possible to form a fabrication layer in which the strength in the edge region has been improved.

Furthermore, by applying radiant energy to the edge region of the fabrication region where a droplet has been discharged a plurality of times at a higher intensity of the radiant energy as in the present embodiment, particles of the powder in the edge region can be bonded in a state in which spread of the droplet in a direction parallel to a lamination surface of the droplet (XY direction) is suppressed. From the result of the temperature d indicated by the edge region of FIG. 13 compared to FIG. 8, it is found that the present embodiment improves the accuracy and strength of the fabrication layer at the edge of the fabrication region as illustrated in FIG. 13.

In the present embodiment, a series of steps of applying radiant energy at a higher intensity of the radiant energy to the edge region of the fabrication region where a droplet has been discharged a plurality of times will be described with reference to FIGS. 15A to 15G.

FIGS. 15A to 15G depict a head 52, a radiant energy source (high) 80a, a radiant energy source (low) 80b, a non-fabrication region e, and a fabrication region f.

In FIGS. 15A to 15G, a main scanning direction is indicated by arrow s indicates.

First, a droplet is dropped a plurality of times onto an edge of a fabrication region (see FIGS. 15A to 15D). Next, radiant energy is applied at a high intensity (see FIG. 15E). Thereafter, a droplet is dropped onto a central portion of the fabrication region (see FIG. 15F). Thereafter, radiant energy is applied at a low intensity (see FIG. 15G). When radiation energy is applied, it is also possible to apply the radiation energy only to a droplet dropping region. However, it is also possible to apply the radiant energy to the entire surface of a powder layer containing a non-fabrication region.

Dropping is first performed onto an edge region in FIGS. 15A to 15G, but is not the limited thereto. For example, after all the necessary droplet amount for the fabrication region of the powder layer (including both a region of a single drop and a region of dropping a plurality of times) is dropped, a step of applying radiant energy can be performed. The radiant energy source in FIGS. 15A to 15G is driven in the main scanning direction. However, a radiant energy source having a similar size to the entire surface region of the powder layer can be included.

<Second Embodiment>

As a second embodiment of the present disclosure, the liquid amount of a droplet applied to a specific divided region can be larger than the liquid amount of a droplet applied to another divided region.

For example, in a case where the concentration of a radiation absorber contained in a droplet is the same, the droplet amount dropped onto an edge region can be set to be larger than that dropped onto a central portion of a fabrication region. By setting the droplet amount to a large amount, penetration of the droplet in the Z direction progresses, and bonding between the k-th layer and the k-1-th layer further progresses. Therefore, the strength of a fabricated object in the Z direction is easily secured. In addition, the degree of absorption of radiant energy in the edge region is also increased. Therefore, the bonding temperature of powder in the edge region can be secured even if a small amount of heat escapes to a non-fabrication region, and therefore the accuracy and strength of a fabricated object can be secured.

During dropping of a droplet onto the k-th layer, when a region corresponding thereto in the k-1-th layer is a non-fabrication region, it is preferable not to increase the droplet amount. This is because penetration of the droplet in the Z direction progresses and the accuracy may be lowered in the Z direction.

<Third Embodiment>

As a third embodiment of the present disclosure, the concentration of a radiation absorber in a droplet applied to a specific divided region can be higher than the concentration of the radiation absorber in a droplet applied to another divided region.

For example, when fabrication is performed using a plurality of types of fabricating liquids having different concentrations of a radiation absorber contained in a droplet, a droplet of a fabricating liquid having a high concentration of the radiation absorber can be dropped onto an edge region of a fabrication region.

By dropping a droplet of the fabricating liquid having a high concentration of the radiation absorber, the degree of absorption of radiant energy is also increased. Therefore, the bonding temperature of powder in the edge region can be secured even if a small amount of heat escapes to a non-fabrication region, and therefore the accuracy and strength of a fabricated object can be secured.

<Fourth Embodiment>

As a fourth embodiment of the present disclosure, when the concentration of a radiation absorber in a droplet applied to a specific divided region is different from the concentration of the radiation absorber in a droplet applied to another divided region, the following can be performed. The radiation absorption efficiency of a radiation absorber in a droplet applied to a specific divided region can be higher than the radiation absorption efficiency of the radiation absorber in a droplet applied to another divided region.

For example, in a case of preparing a plurality of types of radiation absorbers and performing fabrication using a fabricating liquid containing each of the radiation absorbers, a droplet of a fabricating liquid having high radiation absorbing performance can be dropped onto an edge region of a fabrication region.

By dropping a droplet of a fabricating liquid having high radiation absorbing performance, the degree of absorption of radiant energy is also increased. Therefore, the bonding temperature of powder in the edge region can be secured even if a small amount of heat escapes to a non-fabrication region, and therefore the accuracy and strength of a fabricated object can be secured.

<Fifth Embodiment>

As a fifth embodiment of the present disclosure, in an outermost edge area corresponding to sections each having two or more side surfaces that are not adjacent to other sections among a plurality of divided sections in the edge region, the following can be performed. A droplet can be applied to the outermost edge area such that a condition for applying the droplet to the outermost edge area makes the radiation absorption efficiency higher than a condition for applying the droplet to another area other than the outermost edge area of the edge region.

For example, in the edge region of the fabrication region, when the region is divided at a minimum resolution interval, in an area (also referred to as an outermost edge area) with sections each having two or more side surfaces that are not adjacent to other sections of the fabrication region, a radiation absorbing property can be higher than another section in the edge region. The area in contact with a non-fabrication region is large in the outermost edge area having two or more side surfaces that are not adjacent to other sections of the fabrication region, and therefore the amount of heat escape is also large. In order to prevent a decrease in the accuracy and strength of a fabricated object due to escape of heat, fabrication is preferably performed under a condition to enhance the radiation absorbing property in the outermost edge area. For example, the droplet amount may be increased and a droplet may be dropped a plurality of times, or a droplet having a high concentration of a radiation absorber may be dropped a plurality of times.

The outermost edge area will be described with reference to FIG. 16.

In FIG. 16, (i) illustrates a surface (plan view) viewed from above the powder layer. In FIG. 16, (ii) illustrates a schematic view of a divided fabrication image.

FIG. 16 depicts a surface a viewed from above the powder layer, a non-fabrication region e, a fabrication region f, a minimum resolution u, a central region b of the fabrication region, an edge region c of the fabrication region, the outermost edge area r including sections each having two or more side surfaces that are not adjacent to other sections in the edge region, and an enclosure v attached to the outermost edge area in order to distinguish between the outermost edge area and another area that is not the outermost edge area in the edge region.

<Sixth Embodiment>

As a sixth embodiment of the present disclosure, a specific aspect of a method for emitting various types of radiant energy will be described.

FIGS. 17A-1 to 17D-2 are schematic diagrams illustrating a radiant energy irradiation step.

FIGS. 17A-1, 17B-1, 17C-1, and 17D-1 illustrate schematic cross-sectional views of a powder layer. FIGS. 17A-2, 17B-2, 17C-2, and 17D-2 illustrate schematic plan views viewed from above the powder layer. FIGS. 17A-1 to 17D-2 depict a non-fabrication region e, a fabrication region f, a main scanning direction s, a radiant energy source g, and a region h not irradiated with radiant energy. FIGS. 17A-1 to 17D-2 further depict a region j1 irradiated with radiant energy at a higher intensity of the radiant energy, a region j2 irradiated with radiant energy at a medium intensity of the radiant energy, and a region j3 irradiated with radiant energy at a lower intensity of the radiant energy.

FIGS. 17A-1 to 17D-2 illustrate how the radiant energy is applied to the powder layer while the radiant energy source is operated for scanning in the main scanning direction (X direction) and the intensity of the radiant energy source is controlled. By adjusting the intensity of the radiant energy so as to be low in the central portion of the fabrication region and so as to be high in the edge region of the fabrication region, the radiant energy is applied to the powder layer. By increasing the intensity of the radiant energy in the edge region of the fabrication region, the temperature necessary for bonding can be secured, particles of powder are sufficiently bonded, and the accuracy and strength of a fabricated object can be improved.

In FIGS. 17A-1 to 17D-2, only one radiant energy source is used, but in the present embodiment, a plurality of individual radiant energy sources may be arrayed. Although depending on the type of a radiant energy source used, the array of individual radiant energy sources may easily perform individual control in the sub-scanning direction (Y direction) and may easily adjust the intensity of the radiant energy while performing scanning in the main scanning direction.

The radiant energy can be applied repeatedly a plurality of times until the target bonding temperature is reached in the edge region of the fabrication region. The repetition of the radiant energy application is achieved by operating the radiant energy source a plurality of times in the main scanning direction and causing the radiation energy source to pass over a surface of the powder layer.

By adjusting the moving speed of the radiant energy source in the main scanning direction, the application amount of the radiant energy in the edge region of the fabrication region can also be increased.

Furthermore, although the radiant energy source having a length in the sub-scanning direction is used in FIGS. 17A-1 to 17D-2, a radiant energy source having the same size as the powder layer size can also be used. In this case, driving in the main scanning direction is unnecessary.

The temperature of the powder layer may be measured, and the intensity of radiant energy to be applied may be controlled based on the result. For example, the temperature of the edge region of the fabrication region may be measured, and adjustment may be performed such that the intensity of the radiant energy is increased and the radiant energy is applied to the edge region until the temperature rises to the bonding temperature. This makes it possible to obtain a fabricated object with improved accuracy and strength.

In the apparatus for fabricating an object according to an embodiment of the present disclosure, a droplet application condition and an energy irradiation condition can be appropriately set to preferable conditions depending on the types of various powder materials used.

For example, preferable conditions can be set for each item below according to each material such that fabrication can be performed with a plurality of types of powder materials. The type and concentration of the radiation absorber can be selected, the thickness of the edge region of the fabrication region can be set, the number of discharges of a droplet of the fabricating liquid can be set, and the intensity of the radiant energy can be set.

Aspects of the present disclosure are, for example, as follows.

<1> A method for fabricating an object, the method including:

(i) forming a powder layer;
(ii) applying a droplet containing a radiation absorber to the powder layer;
(iii) applying radiant energy to the powder layer; and
(iv) repeating the steps (i) to (iii), in which

in the step (ii), a fabrication region formed by applying the droplet to a surface of the powder layer is divided into a plurality of divided regions, and the droplet is applied a plurality of times to a partial specific divided region among the divided regions, and
in the step (iii), the radiation intensity applied to a range including at least the specific divided region can be changed.
<2> The method for fabricating an object according to <1>, in which the specific divided region is an edge region of the fabrication region adjacent to a non-fabrication region on a surface of the powder layer.
<3> The method for fabricating an object according to <1> or <2>, in which in the step (ii), the number of times of application of the droplet applied to the specific divided region is larger than the number of times of application of the droplet applied to another divided region of the divided regions.
<4> The method for fabricating an object according to any one of <1> to <3>, in which in the step (ii), when the droplet is applied to the powder layer by dropping the droplet onto the powder layer, if the thickness of the powder layer is represented by h, and a distance between adjacent droplets during dropping the droplet is represented by L, the droplet is dropped onto the powder layer such that h < L is satisfied.
<5> The method for fabricating an object according to any one of <1> to <4>, in which in the step (ii), the liquid amount of the droplet applied to the specific divided region is larger than the liquid amount of the droplet applied to another divided region of the divided regions.
<6> The method for fabricating an object according to any one of <1> to <5>, in which in the step (ii), the concentration of a radiation absorber in the droplet applied to the specific divided region is higher than the concentration of a radiation absorber in the droplet applied to another divided region of the divided regions.
<7> The method for fabricating an object according to any one of <1> to <6>, in which in the step (ii), when the type of a radiation absorber in the droplet to be applied to the specific divided region is different from the type of a radiation absorber in the droplet applied to another divided region of the divided regions, the radiation absorption efficiency of the radiation absorber in the droplet to be applied to the specific divided region is higher than the radiation absorption efficiency of the radiation absorber in the droplet applied to another divided region of the divided regions.
<8> The method for fabricating an object according to any one of <5> to <7>, in which when the specific divided region is an edge region of the fabrication region adjacent to a non-fabrication region on a surface of the powder layer and the fabrication region includes a plurality of sections, in the step (ii), the droplet is applied such that, in an outermost edge area corresponding to a section having two or more side surfaces that are not adjacent to other sections among a plurality of divided sections in the edge region, the radiation absorption efficiency is higher than in another area other than the outermost edge area of the edge region.
<9> An apparatus for fabricating an object, the apparatus including:

(i) a unit to form a powder layer;
(ii) a unit to apply a droplet containing a radiation absorber to the powder layer;
(iii) a unit to apply radiant energy to the powder layer; and
(iv) a unit to repeat operations performed by the units (i) to (iii), in which

in the unit (ii), a fabrication region formed by applying the droplet to a surface of the powder layer is divided into a plurality of sections, and the droplet is applied a plurality of times to a partial specific divided region among the divided regions, and

in the unit (iii), the radiation intensity applied to a range including at least the specific divided region can be changed.

According to the method for fabricating an object according to any one of <1> to <8> and the apparatus for fabricating an object according to <9>, the above-mentioned various disadvantages in prior art can be solved, and the object of the present disclosure can be achieved.

The above-described embodiments are illustrative and do not limit the present disclosure. Thus, numerous additional modifications and variations are possible in light of the above teachings. For example, elements and/or features of different illustrative embodiments may be combined with each other and/or substituted for each other within the scope of the present disclosure.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. A method for fabricating an object, the method comprising:

    forming a powder layer (31);
    first applying a droplet (10) containing a radiation absorber to the powder layer (31);
    second applying radiant energy to the powder layer (31); and

    repeating the forming, the first applying, and the second applying,
    wherein the first applying includes:

        applying the droplet (10) to a surface of the powder layer (31) to form a fabrication region;
        dividing the fabrication region into a plurality of divided regions; and
        applying the droplet (10) a plurality of times to a partial specific divided region among the plurality of divided regions, and

    wherein the second applying includes applying the radiant energy with a variable radiation intensity to a range including at least the specific divided region,
    wherein the first applying includes dropping the droplet (10) onto the powder layer (31) such that h < L is satisfied where h represents a thickness of the powder layer (31) and L represents a distance between centers of the droplet (10) and another droplet (10) adjacent to the droplet during dropping.

2. The method according to claim 1,
    wherein the specific divided region is an edge region of the fabrication region adjacent to a non-fabrication region on a surface of the powder layer (31).

3. The method according to claim 1 or 2,
    wherein the first applying includes applying the droplet (10) to the specific divided region a larger number of times than a number of times of applying the droplet (10) to another divided region other than the specific divided region of the plurality of divided regions.

4. The method according to any one of claims 1 to 3,
    wherein the first applying includes applying a larger liquid amount of the droplet (10) to the specific divided region than a liquid amount of the droplet (10) applied to another divided region other than the specific divided region of the plurality of divided regions.

5. The method according to any one of claims 1 to 4,
    wherein in the first applying, a concentration of the radiation absorber in the droplet (10) applied to the specific divided region is higher than a concentration of the radiation absorber in the droplet (10) applied to another divided region other than the specific divided region of the plurality of divided regions.

6. The method according to any one of claims 1 to 5,
    wherein in the first applying, a type of the radiation absorber in the droplet (10) applied to the specific divided region is different from a type of the radiation absorber in the droplet (10) applied to another divided region other than the specific divided region of the plurality of divided regions, and a radiation absorption efficiency of the radiation absorber in the droplet (10) applied to the specific divided region is higher than a radiation absorption efficiency of the radiation absorber in the droplet (10) applied to said another divided region.

7. The method according to any one of claims 4 to 6,

wherein when the specific divided region is an edge region of the fabrication region adjacent to a non-fabrication region on a surface of the powder layer (31) and the fabrication region includes a plurality of sections,
the first applying includes applying the droplet (10) such that, in an outermost edge area of the edge region corresponding to a section having two or more side surfaces not adjacent to other sections of the edge region, a radiation absorption efficiency is higher than in another area of the edge region other than the outermost edge area.

8. An apparatus for fabricating an object configured to perform the method according to any one of claims 1 to 7, the apparatus comprising:

a fabricator (1) configured to form a powder layer (31);
an applier (50) configured to apply a droplet (10) containing a radiation absorber to the powder layer (31);
a radiant energy source (80) configured to apply radiant energy to the powder layer (31); and
a controller (500) configured to repeat formation of the powder layer (31) with the fabricator (1), application of the droplet (10) with the applier (50), and application of the radiant energy with the radiant energy source (80),
the controller (500) configured to:

cause the applier (50) to apply the droplet (10) to a surface of the powder layer (30) to form a fabrication region;
divide the fabrication region into a plurality of divided regions;
cause the applier (50) to apply the droplet (10) a plurality of times to a partial specific divided region among the plurality of divided regions; and
cause the radiant energy source (80) to apply the radiant energy with a variable radiation intensity to a range including at least the specific divided region,
wherein the first applying includes dropping the droplet (10) onto the powder layer (31) such that h < L is satisfied where h represents a thickness of the powder layer (31) and L represents a distance between centers of the droplet (10) and another droplet (10) adjacent to the droplet during dropping.

**Patentansprüche**

1. Verfahren zum Herstellen eines Objekts, wobei das Verfahren umfasst:

Ausbilden einer Pulverschicht (31);
erstes Aufbringen eines Tröpfchens (10), das einen Strahlungsabsorber enthält, auf die Pulverschicht (31);
zweites Aufbringen von Strahlungsenergie auf die Pulverschicht (31); und
Wiederholen des Ausbildens, des ersten Aufbringens und des zweiten Aufbringens,
wobei das erste Aufbringen beinhaltet:

Aufbringen des Tröpfchens (10) auf eine Oberfläche der Pulverschicht (31), um einen Herstellungsbereich zu bilden;
Unterteilen des Herstellungsbereichs in eine Vielzahl von unterteilten Bereichen; und
mehrmaliges Aufbringen des Tröpfchens (10) auf einen partiellen, spezifischen, unterteilten Bereich unter den mehreren unterteilten Bereichen, und

wobei das zweite Aufbringen das Aufbringen der Strahlungsenergie mit einer variablen Strahlungsintensität auf einen Bereich beinhaltet, der zumindest den spezifischen, unterteilten Bereich umfasst.
wobei das erste Aufbringen das Auftropfen des Tröpfchens (10) auf die Pulverschicht (31) umfasst, so dass h < L erfüllt ist, wobei h eine Dicke der Pulverschicht (31) darstellt und L einen Abstand zwischen den Mittelpunkten des Tröpfchens (10) und eines weiteren Tröpfchens (10) neben dem Tröpfchen während des Tropfens darstellt.

2. Verfahren nach Anspruch 1,
wobei der spezifische, unterteilte Bereich ein Randbereich des Herstellungsbereichs benachbart zu einem Nicht-Herstellungsbereich auf einer Oberfläche der Pulverschicht (31) ist.

3. Verfahren nach Anspruch 1 oder 2,
wobei das erste Aufbringen das Aufbringen des Tröpfchens (10) auf den spezifischen unterteilten Bereich umfasst, und zwar häufiger als eine Häufigkeit des Aufbringens des Tröpfchens (10) auf einen anderen unterteilten Bereich als den spezifischen, unterteilten Bereich der mehreren unterteilten Bereiche.

**4.** Verfahren nach einem der Ansprüche 1 bis 3, wobei das erste Aufbringen das Aufbringen einer größeren Flüssigkeitsmenge des Tröpfchens (10) auf den spezifischen, unterteilten Bereich umfasst, und zwar größer als eine Flüssigkeitsmenge des Tröpfchens (10), die auf einen anderen unterteilten Bereich als den spezifischen, unterteilten Bereich der mehreren unterteilten Bereiche aufgebracht wird.

**5.** Verfahren nach einem der Ansprüche 1 bis 4, wobei beim ersten Aufbringen eine Konzentration des Strahlungsabsorbers in dem Tröpfchen (10), das auf den spezifischen, unterteilten Bereich aufgebracht wird, höher ist als eine Konzentration des Strahlungsabsorbers in dem Tröpfchen (10), das auf einen anderen unterteilten Bereich als den spezifischen, unterteilten Bereich der Vielzahl von unterteilten Bereichen aufgebracht wird.

**6.** Verfahren nach einem der Ansprüche 1 bis 5, wobei beim ersten Aufbringen ein Typ des Strahlungsabsorbers in dem Tröpfchen (10), das auf den spezifischen unterteilten Bereich aufgebracht wird, sich von einem Typ des Strahlungsabsorbers in dem Tröpfchen (10) unterscheidet, das auf einen anderen unterteilten Bereich als den bestimmten unterteilten Bereich der mehreren unterteilten Bereiche aufgebracht wird, und eine Strahlungsabsorptionseffizienz des Strahlungsabsorbers in dem Tröpfchen (10), das auf den spezifischen unterteilten Bereich aufgebracht wird, höher ist als eine Strahlungsabsorptionseffizienz des Strahlungsabsorbers in dem Tröpfchen (10), das auf den anderen unterteilten Bereich aufgebracht wird.

**7.** Verfahren nach einem der Ansprüche 4 bis 6,

wobei, wenn der spezifische unterteilte Bereich ein Randbereich des Herstellungsbereichs benachbart zu einem Nicht-Herstellungsbereich auf einer Oberfläche der Pulverschicht (31) ist und der Herstellungsbereich eine Vielzahl von Abschnitten beinhaltet,

das erste Aufbringen das Aufbringen des Tröpfchens (10) derart umfasst, dass in einem äußersten Randbereich des Randbereichs, der einem Abschnitt mit zwei oder mehr Seitenflächen entspricht, die nicht an andere Abschnitte des Randbereichs angrenzen, eine Strahlungsabsorptionseffizienz höher ist als in einen anderen Bereich des Randbereichs als dem äußersten Randbereich.

**8.** Vorrichtung zum Herstellen eines Objekts, die konfiguriert ist, um das Verfahren nach einem der Ansprüche 1 bis 7 durchzuführen, wobei die Vorrichtung umfasst:

eine Herstellungsvorrichtung (1), die konfiguriert ist, um eine Pulverschicht (31) zu bilden; einen Applikator (50), der konfiguriert ist, um ein Tröpfchen (10), das einen Strahlungsabsorber enthält, auf die Pulverschicht (31) aufzutragen; eine Strahlungsenergiequelle (80), die konfiguriert ist, um der Pulverschicht (31) Strahlungsenergie zuzuführen; und eine Steuerung (500), die so konfiguriert ist, dass sie die Bildung der Pulverschicht (31) mit der Herstellungsvorrichtung (1), das Aufbringen des Tröpfchens (10) mit dem Applikator (50) und das Aufbringen der Strahlungsenergie mit der Strahlungsenergiequelle (80) wiederholt, wobei die Steuerung (500) konfiguriert ist zum:

Veranlassen, dass der Applikator (50) das Tröpfchen (10) auf eine Oberfläche der Pulverschicht (30) aufträgt, um einen Herstellungsbereich zu bilden; Unterteilen des Herstellungsbereichs in eine Vielzahl von unterteilten Bereichen; Veranlassen, dass der Applikator (50) das Tröpfchen (10) mehrere Male auf einen partiellen, spezifischen, unterteilten Bereich unter den mehreren unterteilten Bereichen aufträgt; und Veranlassen, dass die Strahlungsenergiequelle (80) die Strahlungsenergie mit einer variablen Strahlungsintensität auf einen Bereich aufbringt, der zumindest den spezifischen unterteilten Bereich umfasst, wobei das erste Aufbringen das Auftropfen des Tröpfchens (10) auf die Pulverschicht (31) umfasst, so dass $h < L$ erfüllt ist, wobei h eine Dicke der Pulverschicht (31) darstellt und L einen Abstand zwischen den Mittelpunkten des Tröpfchens (10) und eines weiteren Tröpfchens (10) neben dem Tröpfchen während des Tropfens darstellt.

## Revendications

**1.** Procédé pour fabriquer un objet, le procédé comprenant :

la formation d'une couche de poudre (31) ; une première application d'une gouttelette (10) contenant un absorbeur de rayonnement sur la couche de poudre (31) ; une seconde application d'une énergie rayonnante sur la couche de poudre (31) ; et la répétition de la formation, de la première application, et de la seconde application,

dans lequel la première application inclut :

l'application de la gouttelette (10) sur une surface de la couche de poudre (31) pour former une région de fabrication ; la division de la région de fabrication en une pluralité de régions divisées ; et l'application de la gouttelette (10) une pluralité de fois sur une région divisée spécifique partielle parmi la pluralité de régions divisées, et

dans lequel la seconde application inclut l'application de l'énergie rayonnante avec une intensité de rayonnement variable sur une étendue incluant au moins la région divisée spécifique, dans lequel la première application inclut l'égouttement de la gouttelette (10) sur la couche de poudre (31) de telle sorte que h < L soit respecté où h représente une épaisseur de la couche de poudre (31) et L représente une distance entre des centres de la gouttelette (10) et d'une autre gouttelette (10) adjacente à la gouttelette durant l'égouttement.

2. Procédé selon la revendication 1, dans lequel la région divisée spécifique est une région de bord de la région de fabrication adjacente à une région de non-fabrication sur une surface de la couche de poudre (31).

3. Procédé selon la revendication 1 ou 2, dans lequel la première application inclut l'application de la gouttelette (10) sur la région divisée spécifique un plus grand nombre de fois qu'un nombre de fois de l'application de la gouttelette (10) sur une autre région divisée autre que la région divisée spécifique de la pluralité de régions divisées.

4. Procédé selon l'une quelconque des revendications 1 à 3, dans lequel la première application inclut l'application d'une plus grande quantité de liquide de la gouttelette (10) sur la région divisée spécifique qu'une quantité de liquide de la gouttelette (10) appliquée sur une autre région divisée autre que la région divisée spécifique de la pluralité de régions divisées.

5. Procédé selon l'une quelconque des revendications 1 à 4, dans lequel, dans la première application, une concentration de l'absorbeur de rayonnement dans la gouttelette (10) appliquée sur la région divisée spécifique est plus élevée qu'une concentration de l'absorbeur de rayonnement dans la gouttelette (10) appliquée sur une autre région divisée autre que la région divisée spécifique de la pluralité de régions divisées.

6. Procédé selon l'une quelconque des revendications 1 à 5, dans lequel, dans la première application, d'un type de l'absorbeur de rayonnement dans la gouttelette (10) appliquée sur la région divisée spécifique est différent d'un type de l'absorbeur de rayonnement dans la gouttelette (10) appliquée sur une autre région divisée autre que la région divisée spécifique de la pluralité de régions divisées, et un rendement d'absorption de rayonnement de l'absorbeur de rayonnement dans la gouttelette (10) appliquée sur la région divisée spécifique est plus élevé qu'un rendement d'absorption de rayonnement de l'absorbeur de rayonnement dans la gouttelette (10) appliquée sur ladite autre région divisée.

7. Procédé selon l'une quelconque des revendications 4 à 6,

dans lequel, lorsque la région divisée spécifique est une région de bord de la région de fabrication adjacente à une région de non-fabrication sur une surface de la couche de poudre (31) et la région de fabrication inclut une pluralité de sections, la première application inclut l'application de la gouttelette (10) de telle sorte que, dans une zone de bord la plus extérieure de la région de bord correspondant à une section ayant deux, ou plus, surfaces latérales non adjacentes à d'autres sections de la région de bord, un rendement d'absorption de rayonnement soit plus élevé que dans une autre zone de la région de bord autre que la zone de bord la plus extérieure.

8. Appareil pour fabriquer un objet configuré pour réaliser le procédé selon l'une quelconque des revendications 1 à 7, l'appareil comprenant :

un dispositif de fabrication (1) configuré pour former une couche de poudre (31) ; un dispositif d'application (50) configuré pour appliquer une gouttelette (10) contenant un absorbeur de rayonnement sur la couche de poudre (31) ; une source d'énergie rayonnante (80) configurée pour appliquer de l'énergie rayonnante sur la couche de poudre (31) ; et un dispositif de commande (500) configuré pour répéter la formation de la couche de poudre (31) avec le dispositif de fabrication (1), l'application de la gouttelette (10) avec le dispositif d'application (50), et l'application de l'énergie rayonnante avec la source d'énergie rayonnante (80), le dispositif de commande (500) étant configuré pour :

faire en sorte que le dispositif d'application (50) applique la gouttelette (10) sur une surface de la couche de poudre (30) pour former une région de fabrication ;

diviser la région de fabrication en une pluralité de régions divisées ;

faire en sorte que le dispositif d'application (50) applique la gouttelette (10) une pluralité de fois sur une région divisée spécifique partielle parmi la pluralité de régions divisées ; et

faire en sorte que la source d'énergie rayonnante (80) applique l'énergie rayonnante avec une intensité de rayonnement variable sur une étendue incluant au moins la région divisée spécifique,

dans lequel la première application inclut l'égouttement de la gouttelette (10) sur la couche de poudre (31) de telle sorte que h < L soit respecté où h représente une épaisseur de la couche de poudre (31) et L représente une distance entre des centres de la gouttelette (10) et d'une autre gouttelette (10) adjacente à la gouttelette durant l'égouttement.

# FIG. 1

# FIG. 2

EP 3 587 075 B1

# FIG. 3

# FIG. 4A

FIG. 4
| FIG. 4A |
|---------|
| FIG. 4B |

601: POWDER LAMINATION
FABRICATING DEVICE

500

500A

501
CPU

502
ROM

503
RAM

504
NVRAM

600
FABRICATION DATA
GENERATION DEVICE

506
EXTERNAL
I/F

505
ASIC

507
I/O

OPERATION
PANEL
522

TEMPERATURE/
HUMIDITY SENSOR
560

SENSORS

EP 3 587 075 B1

# FIG. 4B

| | | |
|---|---|---|
| HEAD DRIVE CONTROLLER ~508 | → | HEAD ~52 |
| MOTOR DRIVER ~510 | → | X DIRECTION SCANNING MECHANISM ~550 |
| MOTOR DRIVER ~511 | → | Z DIRECTION RAISING AND LOWERING MECHANISM ~551 |
| MOTOR DRIVER ~512 | → | Y DIRECTION SCANNING MECHANISM ~552 |
| MOTOR DRIVER ~514 | → | MOTOR (FABRICATION STAGE) ~28 |
| MOTOR DRIVER ~515 | → | MOTOR (FOR ROLLER RECIPROCATION) ~553 |
| MOTOR DRIVER ~516 | → | MOTOR (FOR ROLLER ROTATION) ~26 |
| MAINTENANCE DRIVER ~518 | → | MAINTENANCE MECHANISM ~61 |

EP 3 587 075 B1

# FIG. 5A

# FIG. 5B

# FIG. 5C

# FIG. 5D

FIG. 5E

FIG. 5F

FIG. 6A

FIG. 6B

FIG. 6C

FIG. 7A

FIG. 7B-1

FIG. 7B-2

FIG. 7B-3

# FIG. 8

g: RADIANT ENERGY SOURCE

h: NO IRRADIATION    j: IRRADIATION

k-th LAYER

e: NON-
FABRICATION REGION | f: FABRICATION REGION

t: BONDING
TEMPERATURE

d

# FIG. 9A

e: NON-
FABRICATION REGION    f: FABRICATION REGION

10

20

k-th LAYER

k-1-th LAYER

# FIG. 9B

e: NON-
FABRICATION REGION    f: FABRICATION REGION

k-th LAYER

k-1-th LAYER

# FIG. 9C

e: NON-
FABRICATION REGION    f: FABRICATION REGION

k-th LAYER

k-1-th LAYER

# FIG. 10

(A)

(B)

e: NON-FABRICATION REGION

f: FABRICATION REGION

a

u: MINIMUM RESOLUTION

e: NON-FABRICATION REGION

f: FABRICATION REGION

EP 3 587 075 B1

FIG. 11A-1

FIG. 11A-2

FIG. 11A-3

FIG. 11A-4

EP 3 587 075 B1

FIG. 11B-1

FIG. 11B-2

# FIG. 12

(A)

e: NON-
FABRICATION REGION

f: FABRICATION
REGION

a

(B)

u: MINIMUM RESOLUTION

m: THICKNESS OF EDGE
OF FABRICATION REGION

e: NON-
FABRICATION
REGION

c: FABRICATION
REGION (EDGE)

b: FABRICATION REGION
(CENTRAL PORTION)

EP 3 587 075 B1

# FIG. 13

g: RADIANT ENERGY SOURCE

h: NO IRRA-
DIATION        j1: HIGH   j2: MEDIUM   j3: LOW

n: APPLY A PLURALITY
OF DROPLETS

e: NON-
FABRICATION REGION  |  f: FABRICATION REGION

t

d

# FIG. 14A

# FIG. 14B

EP 3 587 075 B1

## FIG. 15A

52: HEAD

s: MAIN SCANNING DIRECTION

e: NON-FABRICATION REGION | f: FABRICATION REGION

## FIG. 15B

52

s

e: NON-FABRICATION REGION | f: FABRICATION REGION

## FIG. 15C

52

s

e: NON-FABRICATION REGION | f: FABRICATION REGION

## FIG. 15D

52

s

e: NON-FABRICATION REGION | f: FABRICATION REGION

EP 3 587 075 B1

## FIG. 15E

80a: RADIANT ENERGY
SOURCE (HIGH)

s

e: NON-
FABRICATION REGION | f: FABRICATION REGION

## FIG. 15F

52

s

e: NON-
FABRICATION REGION | f: FABRICATION REGION

## FIG. 15G

80b: RADIANT ENERGY
SOURCE (LOW)

s

e: NON-
FABRICATION REGION | f: FABRICATION REGION

# FIG. 16

(A)

(B)

u: MINIMUM RESOLUTION

e: NON-
FABRICATION REGION

e: NON-
FABRICATION
REGION

f: FABRICATION
REGION

a

r: FABRICATION REGION
(OUTERMOST EDGE)

c: FABRICATION
REGION (EDGE)

b: FABRICATION REGION
(CENTRAL PORTION)

EP 3 587 075 B1

# FIG. 17A-1

g: RADIANT ENERGY SOURCE

s: MAIN SCANNING
DIRECTION

h: NO
IRRADIATION

n

e: NON-
FABRICATION REGION | f: FABRICATION REGION

# FIG. 17B-1

s

j3: LOW

e: NON-
FABRICATION REGION | f: FABRICATION REGION

# FIG. 17A-2

s: MAIN SCANNING
DIRECTION

h: NO
IRRADIATION

g: RADIANT
ENERGY
SOURCE

# FIG. 17B-2

s

j1: HIGH

j2: MEDIUM

j3: LOW

EP 3 587 075 B1

FIG. 17C-1

s ← ◻ j2: MEDIUM

e: NON-FABRICATION REGION | f: FABRICATION REGION

FIG. 17D-1

s ← ◼ j1: HIGH

e: NON-FABRICATION REGION | f: FABRICATION REGION

FIG. 17C-2

s ←

FIG. 17D-2

s ←

EP 3 587 075 B1

**REFERENCES CITED IN THE DESCRIPTION**

**Patent documents cited in the description**

- JP 4691680 B
- WO 2005011959 A1
- WO 2016119885 A1
- US 20170151722 A1
- WO 2017200534 A1
- WO 2017200533 A1